(19) Europäisches Patentamt
European Patent Office
Office européen des brevets

(11) **EP 1 971 058 A1**

(12) **EUROPEAN PATENT APPLICATION**
published in accordance with Art. 158(3) EPC

(43) Date of publication:
**17.09.2008 Bulletin 2008/38**

(51) Int Cl.:
*H04J 11/00* (2006.01)    *H04B 1/707* (2006.01)

(21) Application number: **05816573.9**

(22) Date of filing: **15.12.2005**

(86) International application number:
**PCT/JP2005/023081**

(87) International publication number:
**WO 2007/069329 (21.06.2007 Gazette 2007/25)**

(84) Designated Contracting States:
**DE FR GB IT**

(71) Applicant: **Fujitsu Limited**
**Kawasaki-shi, Kanagawa 211-8588 (JP)**

(72) Inventors:
• **SEYAMA, Takashi**
**Kanagawa 211-8588 (JP)**

• **DATEKI, Takashi**
**Kanagawa 211-8588 (JP)**
• **FURUKAWA, Hideto**
**Kanagawa 211-8588 (JP)**

(74) Representative: **Holtby, Christopher Lawrence**
**Haseltine Lake**
**Lincoln House**
**300 High Holborn**
**London WC1V 7JH (GB)**

(54) **TRANSMISSION PROCESSING METHOD AND BASE STATION IN MOBILE COMMUNICATION SYSTEM**

(57) In a case where multiple kinds of frames having different lengths (Ngi_s and Ngi_l) of guard intervals inserted before the head of the effective data, the length of the guard intervals are adjusted in such a manner that at least the position of a part of the effective data is are apart from frame timing by the same amount. Thereby, on the receiving end, it is always possible to perform reception processing such as FFT processing in an appropriate time division at a fixed timing, without causing sample deviation of the effective data.

FIG. 5

**Description**

TECHNICAL FIELD

The present invention relates to a transmission processing method in mobile communications systems and also to base stations. For example, the present invention relates to technology suitable for use in mobile communications systems (cellular system) which employ the multi-carrier modulation method such as OFDM (Orthogonal Frequency Division Multiplexing).

BACKGROUND ART

The OFDM modulation scheme uses a guard interval (GI) which is a copy of a part of an effective symbol (effective data) and added to the effective symbol for the purpose of reducing deterioration of performance due to delay waves. Since the length of a guard interval added is determined based on an expanse of delay in a propagation path, an embodiment in which multiple guard interval lengths are switched in an operation is proposed.

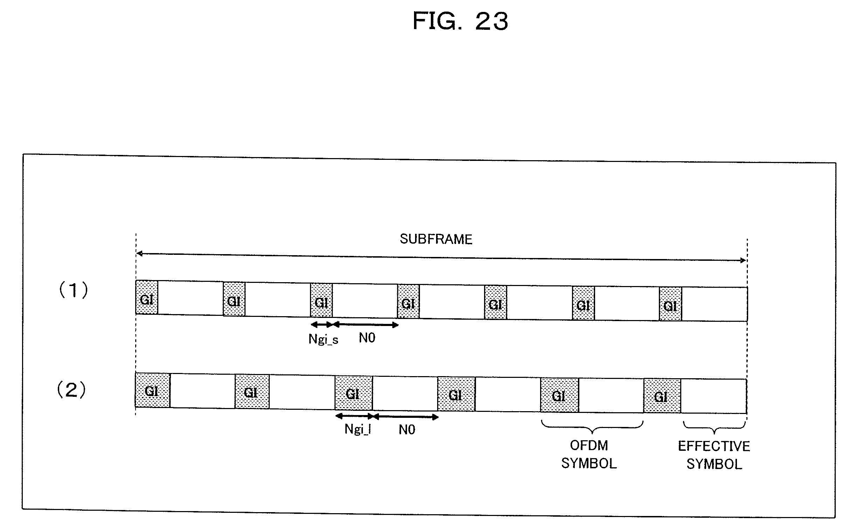

As an example of such an embodiment, there is a system in which the number of symbols transmitted by subframes of the same length is changed, and the guard interval length is adjusted. In such a system, in a cell (hereinafter will be called a large cell) with a large radius which evolves in the suburbs where few objects executing a shielding effect are present, a subframe format having a long guard interval length $Ngi\_1$ is used as shown in (2) of FIG. 23, and contrarily, in a cell (hereinafter will be called a small cell) with a small radius which evolves in urban areas where a lot of objects executing a shielding effects are present, a subframe format having a short guard interval length $Ngi\_s$ is used as shown in (1) of FIG. 23. In this instance, in this FIG. 23, N0 indicates the length of an effective symbol, and one OFDM symbol is formed by one guard interval and one effective symbol.

In cellular systems, upon start of communications, it is necessary for mobile station terminals to perform cell search processing which is an operation of searching a cell with which the mobile station terminal is to establish a radio link. Hereinafter, a description will be made of an example of cell search processing in a case where subframe formats of multiple guard interval lengths exist in a mixed manner thereof.

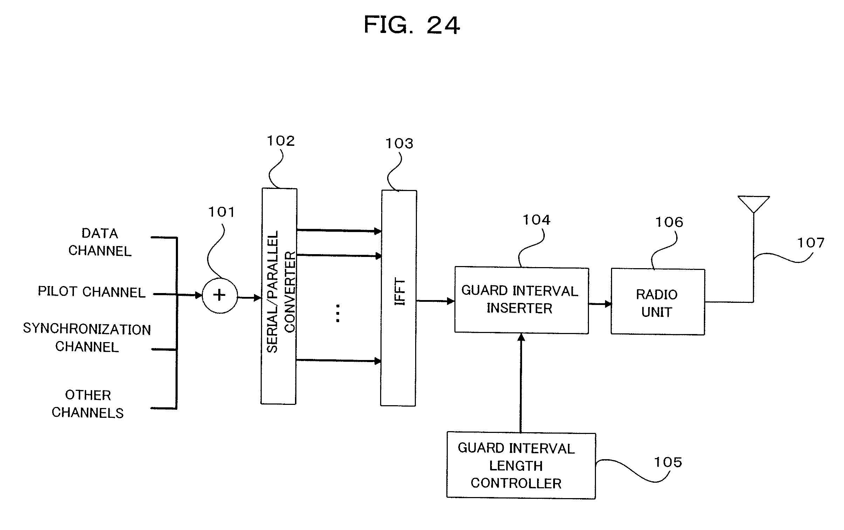

FIG. 24 shows a construction of a base station transmitter apparatus. The base station transmitter apparatus of FIG. 24 includes, for example: a channel multiplexer 101; a serial/parallel converter 102; an inverse fast Fourier transformer (IFFT) 103; a guard interval inserter 104; a guard interval length controller 105: a radio unit 106; and a transmitter antenna 107. After the channel multiplexer 101 time-division multiplexes a signal (symbol) of a data channel, a signal (symbol) of a pilot channel, a signal (symbol) of a synchronization channel (SCH), and etc., the serial/parallel converter 102 performs serial to parallel conversion of the time-division multiplexed signals to map the converted signals to each subcarrier. The IFFT 103 performs IFFT processing, the time-division multiplexed signal thereby being converted into a time domain signal. In this instance, in the following description, signals (symbols) of the above mentioned various channels sometimes be simply called "so-and-so channels" in a shortened manner.

The time domain signal is input to the guard interval inserter 104, and a guard interval of a length (in FIG. 23, $Ngi\_s$ or $Ngi\_l$) determined by the guard interval length controller 105 is inserted to the time domain signal by the guard interval inserter 104. The resultantly obtained signal is then transmitted toward a mobile station terminal as a downlink radio signal by way of the radio unit 106 and the transmitter antenna 107.

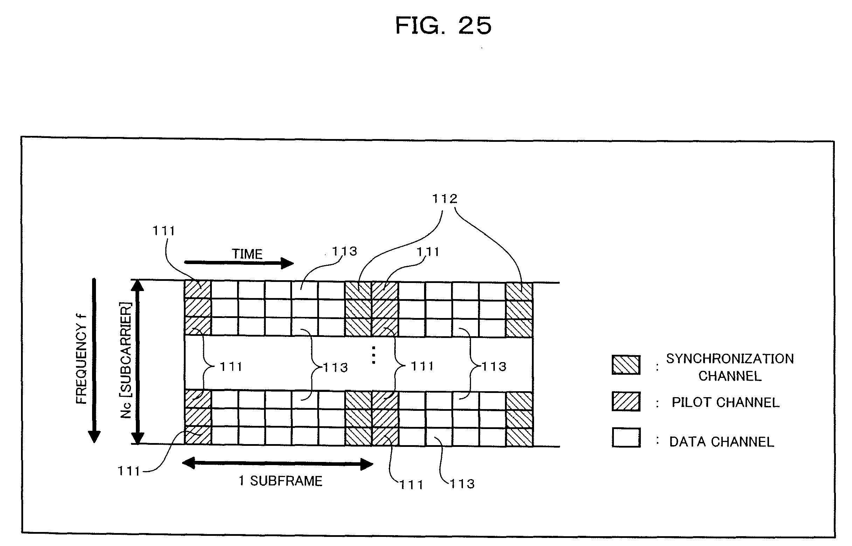

FIG. 25 illustrates the construction (format) of a subframe containing seven OFDM symbols per subframe of the above mentioned radio signal. As shown in FIG. 25, the subframe has a construction such that various channels (OFDM symbols) are multiplexed in the two-dimensional direction with time and frequency. That is, a pilot channel shown by the diagonally shaded part 111, a synchronization channel (SCH) indicated by the diagonally shaded part 112, and a data channel indicated by the reference character 113 from which these diagonally shaded parts 111 and 112 are withdrawn, are time-division multiplexed in each subcarrier (frequency) (each row of FIG. 25), a subframe thereby being constructed.

Here, the synchronization channel (SHC) has a common pattern in all the cells, and is time-division multiplexed to the end of a subframe. The pilot channel has a scramble code which is information unique to a cell, and is time-division multiplexed to the head of a subframe. The mobile station terminal is capable of identifying existing cells by means of using such scramble codes. In this instance, the following non-patent documents 1 and 2 also describe a downlink channel construction and cell search processing on the OFDM base.

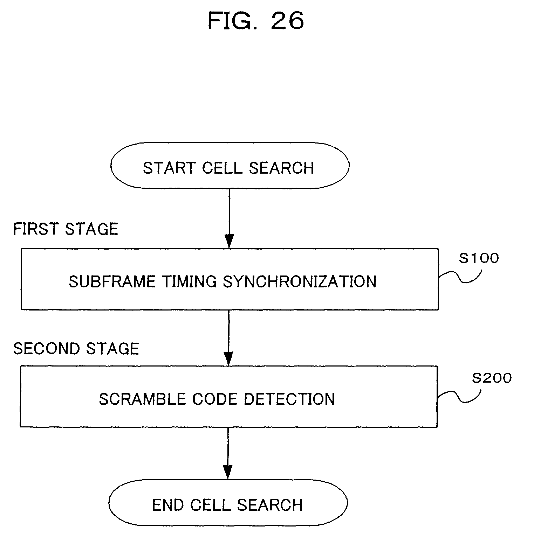

Subsequently, a cell search processing sequence in the mobile station terminal is shown in FIG. 26. First of all, on the first stage, correlation with the replica of a time signal of the synchronization channel (SCH) which has already been known is detected, and for example, timing indicating the maximum correlation value is assumed to be subframe timing (step S100).

On the second stage, fast Fourie transform (FFT) processing is performed with the subframe timing detected on the first stage (that is, the detected subframe becomes FFT timing) to generate frequency domain signals, and extracts the above mentioned pilot channel from the generated signals. Then, correlation between the extracted pilot channel and the candidate scramble codes (pilot replicas), and for example, a candidate scramble code showing the maximum value is determined to be a detected scramble code (step S200).

In addition, as an example of a previous cell search processing, there is another technique proposed in the following non-patent document 3. This technique is the three-stage fast cell search method using a pilot channel in downlink broadband OFCDM. The technique groups scramble codes beforehand, and detect a scramble code group before scramble code identifying processing. This makes it possible to narrow scramble codes at the time of detecting a scramble code, so that the speed of cell search processing is enhanced.

Non-patent Document 1: 3GPP R1-051549 *[sic],* "Physical Channels and Multiplexing in Evolved UTRA Donwlink"; NTT DoCoMo, NEC, SHARP; August 29, 2005

Non-patent Document 2: 3GPP R1-051549, "Cell Search procedure for initial synchronization and neighbour cell identification"; Nokia; November 7, 2005

Non-patent Document 3: Tanno, Arata, Higuchi, and Sawabashi; "The Three-stage Fast Cell Search Method Using Pilot Channel in Downlink Broadband OFCDM"; Technical Report of IEICE, RCS2002-40, CQ2002-40 (2002-04), pp. 135-140

## DISCLOSURE OF THE INVENTION

According to the above cell search processing procedure, asshowninFIG. 27, on a mobile station terminal, the subframe timing synchronization processor 201 detects subframe timing of a reception signal as processing of the first stage (step S100), and the GI remover 202 removes a guard interval in the reception signal in accordance with the detected subframe timing as processing of the second stage (step S200). Then, the FFT 203 performs FFT processing to extract a pilot channel, and a pilot correlation processor 204 performs arithmetic operation processing of correlation with candidate scramble codes. As a result, a scramble code is detected.

However, in a case where a pilot channel is extracted in the scramble code detecting processing on the second stage by means of FFT processing performed with the subframe timing (FFT timing) detected on the first stage, it can be impossible to perform the FFT processing with the optimal FFT timing since the mobile terminal station does not have information about a guard interval length of a subframe transmitted from the base station (transmitter apparatus).

For example, when two types of subframe formats, a subframe format (hereinafter will be called a long GI subframe) having a long GI length shown in (2) of FIG. 23 and a subframe format (hereinafter will be called a short GI subframe) having a short GI length shown in (1) of FIG. 23, are used in a mixed manner thereof, since the mobile station terminal does not know whether the subframe of a reception signal indicated by the reference character 300 is a long GI subframe or a short GI subframe, it is probable that FFT processing is performed with erroneous timing (time division).

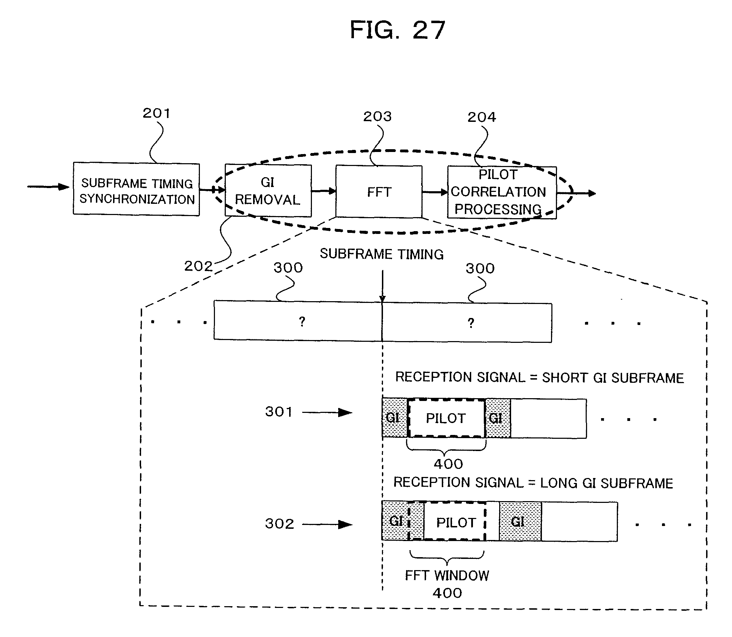

That is, as indicated by the reference character 301 in FIG. 27, in a case where a time division (FFT window shown by the dotted line frame) of FFT processing with respect to a short GI subframe is optimized to an effective symbol (pilot symbol) interval, if a reception signal has a long GI subframe, a part of effective symbols (pilot symbols) becomes off the FFT window 400 as indicated by the reference character 302. Thus, resultantly, it becomes impossible to extract a pilot channel correctively. In this instance, contrarily to this, in a case where the FFT window 400 is optimized with respect to a long GI subframe, the result becomes similar to the above.

Because of this, in a system in which subframe formats of different GI lengths are present in amixedmanner thereof, it is necessary that the mobile station terminal performs FFT processing with subframe timing (FFT window 400) optimal to each GI length which is a candidate (that is, each of the subframes of different GI lengths) and performs correlation processing. That is, it is necessary that the GI remover 202, the FFT 203, and the pilot correlation processor 204, shown in FIG. 27, of the number of candidate GI lengths are provided. In this case, the apparatus construction of a motile station becomes extremely complex.

Thus, the following method is considerable. FFT processing is performed with a subframe having the minimum GI length, out of the candidate GI lengths, as a reference. After correction of the amount of phase rotation due to deviation of FFT timing, pilot correlation processing is performed for each of the subframes of different GI lengths. In this case, however, although only increase in a pilot correlation processing amount is caused, the effect of performance improvement in a case of a long GI length cannot be expected. Further, since such increase in the amount of pilot correlation processing leads to enlargement of the number of candidates at the time of scramble code detection processing, an erroneous detection rate thereby being increased, so that performance are also deteriorated.

In this instance, according to the technology of the above non-patent document 3, a group code is modulated with the pilot of the head of a subframe which is adjacent in terms of time. In a case where multiple subframes of different GI lengths are present in a mixed manner thereof, however, demodulation must be performed in all the candidate GI lengths by use of pilot channels subjected to FFT processing, so that the amount of processing is increased and the number of candidates at the time of detection is increased, leading to deterioration of performance.

The present invention is originated in terms of the above issues. One object of the present invention is making it possible for the mobile station terminal to perform FFT processing always with the optimal timing (FFT window) even when subframes of multiple GI lengths are used in a mixed manner thereof, without depending upon the difference of subframe formats, so that the mobile station terminal apparatus is simplified and the performance improvement at the time of cell search processing is realized.

<u>MEANS TO SOLVE THE ISSUES</u>

In order to accomplish the above object, the following transmission processing method in a mobile communication system and the following base station may be used.

(1) As a generic aspect, there provided is a transmission processing method for a mobile communications system which includes a base station and a mobile station adapted to perform radio communications with the base station in a cell that is a radio communication area formed by the base station, and which is operable to transmit a plurality of kinds of frames with guard intervals of different lengths inserted before effective data in a mixed condition thereof as downlink communications frames from the base station to the mobile station, the transmission processing method comprising the steps of: on the base station, adjusting the length of a guard interval in such a manner that at least the positions of a part of the effective data of the plurality of kinds of frames are apart from frame timing by the same amount; and transmitting the adjusted frames to the mobile station.

(2) As a preferred aspect, the transmission processing method comprises the step of : on the base station, performing the above adjustment in such a manner that, when two kinds of frames into which guard intervals of different lengths are inserted are used, the length of a guard interval to be inserted before the effective data in one frame agree to the length of a guard interval to be inserted before the effective data in the other frame.
(3) As another preferred aspect, the transmission processing method comprises the step of: on the base station, performing the above adjustment so as to adjust the length of a guard interval to be inserted before the effective data of the other frame to the length of the minimum guard interval among the plurality of kinds of frames.

(4) As still another preferred aspect, the transmission processing method comprises the step of: on the base station, inserting a guard interval of a length equal to a difference between the length of the guard interval of the other frame and the length of the minimum guard interval into the end of the effective data.
(5) As yet another preferred aspect, the effective data is information unique to the cell.

(6) As a further preferred aspect, the information unique to the cell is information for the mobile station to identify a scramble code unique to the cell.
(7) As another further preferred aspect, the information unique to the cell is broadcasting information to the mobile station.
(8) As a yet further preferred aspect, the information unique to the cell contains information relating to the length of a guard interval.

(9) As a still further preferred aspect, the transmission processing method comprises the step of: on the base station, inserting information for the mobile station to identify a scramble code unique to the cell into effective data of the leading portion of the frame; and inserting a result obtained by means of multiplying information for identifying a group of the scramble codes, which are grouped by information for identifying the scramble code, by information for identifying the scramble code, as scramble code group information into effective data at the end portion of the frame.
(10) As another preferred aspect, the transmission processing method comprises the step of: on the mobile station, demodulating the scramble code group information inserted into effective data of the end portion of the frame by means of information for identifying the scramble code inserted into effective data of the leading portion of the frame.

(11) As yet another preferred aspect, the transmission processing method comprises the step of: on the base station,

making the scramble code group information include information relating to the length of a guard interval.

(12) As still another preferred aspect, the transmission processing method comprises the step of: on the mobile station, detecting information relating to the length of the guard interval; and performing reception processing of the frame on the basis of the detected information.

(13) As another generic aspect, there provided is a base station which includes a base station and a mobile station adapted to perform radio communications with the base station in a cell that is a radio communication area formed by the base station, and which is operable to transmit a plurality of kinds of frames with guard intervals of different lengths inserted before effective data in a mixed condition thereof as downlink communications frames from the base station to the mobile station, the base station comprising: a guard interval inserting unit which inserts a guard interval before effective data of the leading portion of the frame; and a guard interval length controlling unit which controls the length of a guard interval to be inserted by the guard interval inserting unit in such a manner that at least the positions of a part of the effective data of the plurality of kinds of frames are apart from frame timing by the same amount.

(14) As a preferred aspect, the guard interval length controlling unit performs the above adjustment in such a manner that, when two kinds of frames to which guard intervals of different lengths are used, the length of a guard interval to be inserted before the effective data in one frame agree to the length of a guard interval to be inserted before the effective data in the other frame.

(15) As another preferred aspect, the guard interval length controlling unit performs the above adjustment so as to adjust the length of a guard interval to be inserted before the effective data of the other frames to the length of the minimum guard interval among the plurality of kinds of frames.

(16) As yet another preferred aspect, the guard interval length controlling unit inserts a guard interval of a length equal to a difference between the length of the guard interval of the other frame and the length of the minimum guard interval into the end of the effective data.

(17) As still another preferred aspect, the effective data is information unique to the cell.

(18) As a further preferred aspect, the information unique to the cell is information for the mobile station to identify a scramble code unique to the cell.

(19) As yet another generic aspect, there provided is a transmission processing method for a mobile communications system which includes a base station and a mobile station adapted to perform radio communications with the base station in a cell that is a radio communication area formed by the base station, and which is operable to transmit a plurality of kinds of frames with guard intervals of different lengths inserted before effective data in a mixed condition thereof as downlink frames from the base station to the mobile station, the transmission processing method comprising the steps of: on the base station, giving a phase rotation to the effective data of at least any one of the frames in accordance with a difference between the length of a guard interval of the effective data and the length of another guard interval of another frame; and transmitting the frame after being subjected to the phase rotation processing to the mobile station.

(20) As still another generic aspect, there provided is a base station including a base station and a mobile station adapted to perform radio communications with the base station in a cell that is a radio communication area formed by the base station, and which is operable to transmit a plurality of kinds of frames with guard intervals of different lengths inserted before effective data in a mixed condition thereof as downlink communications frames from the base station to the mobile station, the base station comprising: a guard interval inserting unit which inserts a guard interval before effective data of the leading portion of the frame; and a phase rotation processing unit which gives a phase rotation to the effective data of at least any one of the frames in accordance with a difference between the length of a guard interval of the effective data and the length of another guard interval of another frame.

EFFECTS OF THE PRESENT INVENTION

According to the above-described aspect, at least any of the following effects and benefits are obtained.

(1) Even in a system in which multiple kinds of frames of different guard interval lengths are present in a mixed manner thereof, on the receiving end (mobile station), it is possible to always perform reception processing such as FFT processing to effective data in an appropriate time division at fixed timing, without causing sample deviation of the effective data. Accordingly, appropriate processing (for example, cell search processing, etc.) is realized without causing increase in the scale and the complexity of the mobile station, so that the mobile station can be simplified and performance improvement can be realized.

(2) Further, because of the effective data containing information relating to the guard interval length, it becomes possible to not only identify a cell (scramble code) by means of cell search processing but also identify the guard interval length of a reception frame, so that demodulation processing afterward can be performed appropriately.

BRIEF DESCRIPTION OF THE DRAWINGS

FIG. 1 is a block diagram illustrating a construction of a base station transmitter apparatus according to a first preferred embodiment;
FIG. 2 is a flowchart for describing an operation (transmission processing) on the base station transmitter apparatus shown in FIG. 1;
FIG. 3 is a timing chart for describing an operation (transmission processing) on the base station transmitter apparatus shown in FIG. 1;
FIG. 4 is a diagram illustrating an example of a subframe format (two-dimensional expression) used by the base station transmitter apparatus shown in FIG. 1;
FIG. 5 is a diagram illustrating an example of a subframe format (time domain expression) used by the base station transmitter apparatus in FIG. 1;
FIG. 6 is a block diagram illustrating a construction of a mobile station terminal shown in FIG. 1;

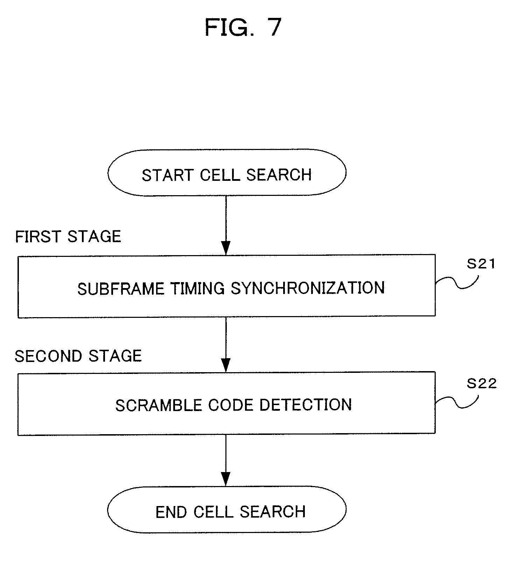

FIG. 7 is a flowchart for describing cell search processing performed on the mobile station terminal shown in FIG. 6;
FIG. 8 is a schematic diagram for describing an operation of an FFT of the mobile station terminal shown in FIG. 6;
FIG. 9 is a schematic diagram for describing an operation of a demodulator of the mobile station terminal shown in FIG. 6;
FIG. 10 is a diagram illustrating an example of a subframe format (two-dimensional expression) according to a second embodiment;
FIG. 11 is a diagram illustrating an example of a subframe format (time domain expression) according to the second embodiment;
FIG. 12 is a diagram illustrating an example of a subframe format (two-dimensional expression) used in a previous art (non-patent document 3);
FIG. 13 is a diagram illustrating an example of a subframe format (two-dimensional expression) according to a third embodiment;
FIG. 14 is a diagram illustrating an example of a subframe format (time domain expression) according to the third embodiment;
FIG. 15 is a diagram illustrating an example of another subframe format (two-dimensional expression) according to the third embodiment;
FIG. 16 is a diagram illustrating an example of a subframe format (two-dimensional expression) according to a fourth embodiment;
FIG. 17 is a diagram illustrating an example of a subframe format (time domain expression) according to the fourth embodiment;
FIG. 18 is a schematic diagram for describing reception processing (FFT processing) on the mobile station in a case where the subframe format shown in FIGS. 16 and 17 are used;
FIG. 19 is a block diagram illustrating a construction of a base station transmitter apparatus according to a fifth preferred embodiment;
FIG. 20 is a flowchart for describing an operation (transmission processing) of the base station transmitter apparatus shown in FIG. 19;
FIG. 21 is a timing chart for describing an operation (transmission processing) of the base station transmitter apparatus shown in FIG. 19;
FIG. 22 is a diagram illustrating an example of a subframe format (time domain expression) according to the fifth embodiment;
FIG. 23 is a diagram illustrating an example of a subframe format (time domain expression) in a case of employing a previous OFDM modulation scheme;

FIG. 24 is a block diagram illustrating a construction of a base station transmitter apparatus employing a previous OFDM modulation scheme;

FIG. 25 is a diagram illustrating an example of a subframe format (two-dimensional expression) used by a system employing a previous OFDM modulation scheme;

FIG. 26 is a flowchart for describing cell search processing performed on a previous mobile station; and

FIG. 27 is a schematic diagram for describing reception processing (FFT processing) at the time of cell search performed on a previous mobile station.

DESCRIPTION OF REFERENCE CHARACTERS

1, 1A...base station transmitter apparatus
10...channel multiplexer
11...serial/parallel converter
12...inverse fast Fourier transformer (IFFT)
13...guard interval inserter
14...radio unit
15...transmitter antenna
16...subframe format storage
17...transmission subframe format determiner
18...channel multiplexing controller
19...guard interval length controller
19a...phase rotation processor
2...mobile station terminal (UE)
20...receptor antenna
21...radio unit
22...first stage processor
22-1...synchronization channel replica signal storage
22-2...correlation processor
22-3...subframe timing detector
23...second stage processor
23-1...GI remover
23-2...FFT
23-3...pilot extractor
23-4...candidate scramble code storage
23-5...pilot correlation processor
23-6...scramble code detector
23-7...pilot/group identification information extractor
23-8...group identification processor
23-9...candidate group code storage
2 4...demodulator
111...pilot channel
112...synchronization channel (SCH)
113...data channel
116...broadcasting information channel
118...group identification information (S-SCH)
300...reception signal
400...FFT window

BEST MODE FOR CARRYING OUT THE INVENTION

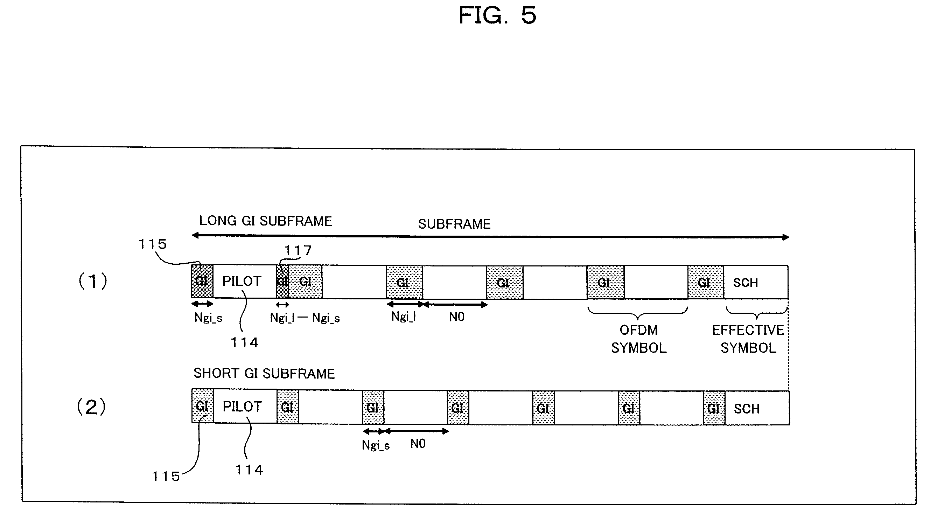

Embodiments will now be described with reference to the relevant accompanying drawings. In this instance, the description will be made taking an example of OFDM communications system in which subframes (short GI subframe and long GI subframe) of two types of guard interval lengths are mixed. In addition, similar to FIG. 23, the number of OFDM symbols contained in a short GI subframe is seven, and the number of OFDM symbols contained in a long GI subframe is six. The length of a effective symbol is N0 in any of the frame formats; the GI length of a short GI subframe is Ngi_s; the GI length of a long GI subframe is Ngi_l (see, for example, FIG. 5).

[A] First Embodiment:

a) Base Station Transmitter apparatus:

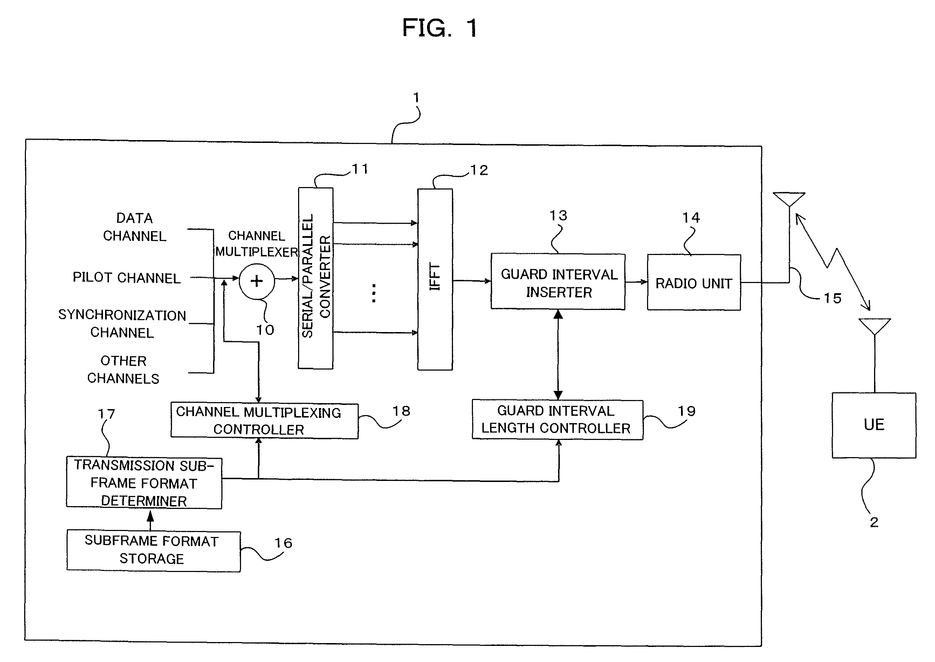

FIG. 1 is a block diagram showing a construction of a base station transmitter apparatus according to a first embodiment. The base station transmitter apparatus 1 in FIG. 1 includes, for example, a channel multiplexer 10, a serial/parallel converter 11, an IFFT 12, a guard interval (GI) inserting unit 13, a radio unit 14, a transmitter antenna 15, a subframe format storage 16, a transmission subframe format determiner 17; a channel multiplexing controller 18, and a guard interval length controller 19.

Here, the cannel multiplexer 10 time-division multiplexes each channel signal (modulation data) of various types of channels (data channel, pilot channel, synchronization channel, etc.) which is to be transmitted to the mobile station terminal (UE: User Equipment) 2, following control from the channel multiplexing controller 18. The serial/parallel converter 11 (hereinafter will also be referred to as S/P converter) performs serial/parallel conversion of signals (Nc-number of modulation data pieces) time-division multiplexed by the channel multiplexer 10 and then maps each signal to each subcarrier.

An IFFT 12 performs IFFT processing of the demodulation data mapped to each subcarrier by the unit of Nc-number of data pieces to convert the data into a time domain signal. The GI inserting unit 13 follows control from the guard interval length controller 19 to insert a guard interval [of one of the above mentioned two types of GI lengths ($Ngi\_s$ and $Ngi\_l$)] into the time domain signal.

Here, in the present example, as shown in, for example, (2) of FIG. 5, as to a short GI subframe, a guard interval of a GI length of $Ngi\_s$ is added to the head of the effective symbol of a pilot channel (a scramble code which is information unique to a cell). As to a long GI subframe, as shown in (1) of FIG. 5, a guard interval equal to the minimum GI length $Ngi\_s$ is added to a head of the effective symbol of a pilot channel (see reference character 115), and a guard interval equal to a difference ($Ngi\_l - Ngi\_s$) between the maximum GI length $Ngi\_l$ and the minimum GI length $Ngi\_s$ is added to the end of the effective symbol (see reference character 117). Such guard interval insertion processing is controlled by the guard interval length controller 19.

The radio unit 14 performs predetermined radio processing such as frequency conversion (up conversion) of the short GI subframe or the long GI subframe after guard interval insertion thereto into a predetermined radio frequency, and thus obtained radio signals are transmitted to a propagation path by way of the transmitter antenna 15.

The subframe format storage 16 stores information used at the time of constructing (forming) transmission subframes, such as information relating to the type of subframe format to be transmitted (in the present example, information specifying whether the subj ect frame is a short GI subframe or a long GI subframe), the number of transmission symbols (Nsf) per subframe with respect to each subframe, the GI length ($Ngi\_s$ and $Ngi\_l$) of each subframe, or the like.

The transmission subframe format determiner 17 determines a subframe format (short GI subframe format or long GI subframe format) to be transmitted, and reads information used for forming the determined subframe format from the subframe format storage 16, and then gives instructions to the channel multiplexing controller 18 and the guard interval length controller 19.

The channel multiplexing controller 18 controls time-division multiplexing of the above mentioned each channel signal (modulation data) performed by the channel multiplexer 10, following the above mentioned instruction from the transmission subframe format determiner 17. The channel multiplexing controller 18 performs control in such a manner that Nc-number of signals of each channel per 10 OFDM symbols are input to the channel multiplexer 10 in a predetermined time sequence. For this purpose, the channel multiplexing controller 18 has an internal counter (not illustrated) for counting the number (Nsf) of OFDM symbols per subframe.

Then, the guard interval length controller 19 controls guard interval insertion processing performed by the GI inserting unit 13. As already described, as to a short GI subframe, the guard interval length controller 19 adds a guard interval of a GI length $Ngis\_s$ to the head of an effective symbol (see reference character 115) as shown in (2) of FIG. 5. As to a long GI subframe, the guard interval length controller 19 adds a guard interval of a length equal to a length of the minimum GI length $Ngi\_s$ to the end of an effective symbol (see reference character 115). Further, the guard interval length controller 19 controls guard interval insertion processing in such a manner that a guard interval equal to a difference ($Ngi\_l - Ngi\_s$) between the maximum GI length $Ngi\_l$ and the minimum GI length $Ngi\_s$ to the end of the effective symbol (see reference character 117).

Hereinafter, a detailed description will be made of an operation (transmission processing) of the base station transmitter apparatus 1 (hereinafter also will be simply called "base station 1") having the above described construction of the present embodiment.

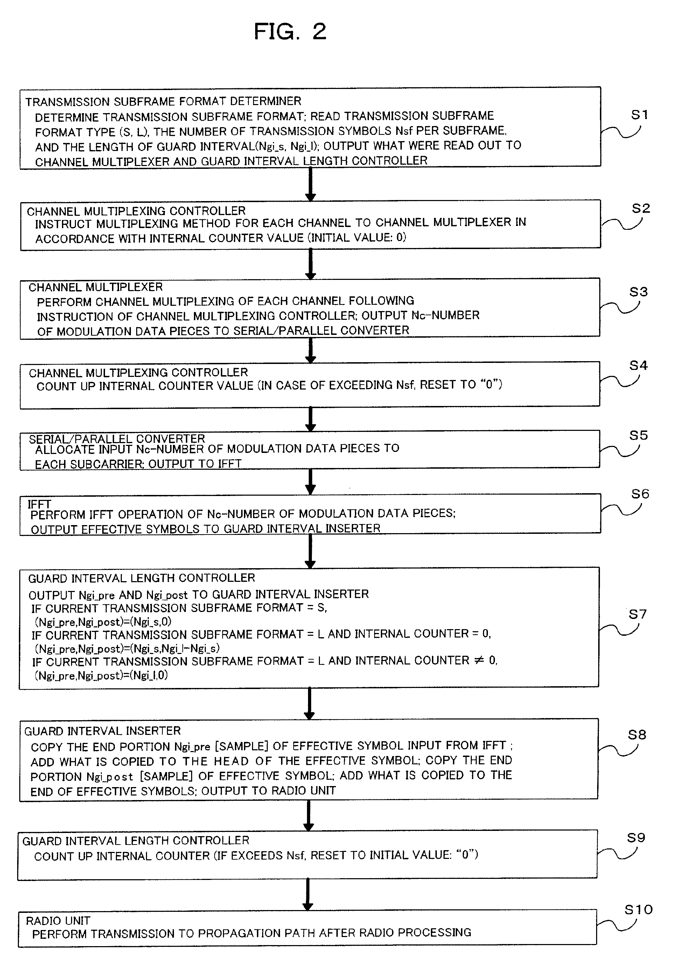

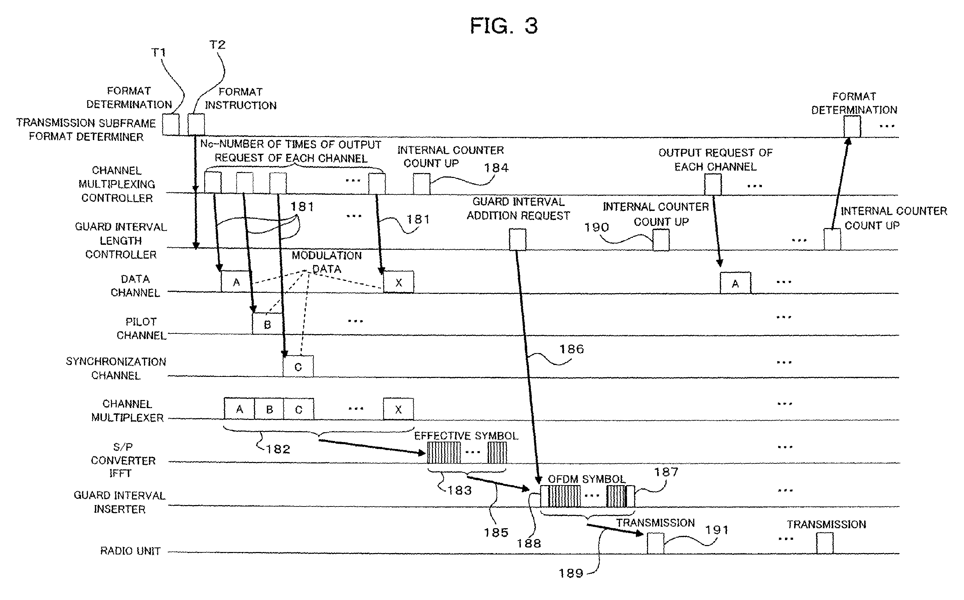

On the base station 1, the transmission subframe format determiner 17 determines a transmission subframe format (see timing T1 in FIG. 3), and reads the type of subframe format (S and L), the number Nsf of transmission symbols per subframe, and the guard interval length ($Ngi\_s$ and $Ngi\_l$) from the subframe format storage 16, and then outputs (instructs) what are read out to the channel multiplexing controller 18 and the guard interval length controller 19 (see step S1 of FIG. 2 and timing T2 of FIG. 3). In this instance, S of the above transmission subframe format types (S and L) means a short GI subframe format; L of the above transmission subframe format types means a long GI subframe format.

As a result, the channel multiplexing controller 18 instructs the channel multiplexer 10 of the multiplexing method for each channel in accordance with the value of the inner counter (initial value: "0") (step S2 of FIG. 2). At that time, as shown in FIG. 3, the guard interval length controller 19 outputs an output request for each channel signal only Nc-number of times (the number of subcarriers), thereby inputting modulation data (A, B, C, ...) of Nc-number of channels to the channel multiplexer 10 (see arrow 181), following the above described instruction in a predetermined sequence.

The channel multiplexer 10 performs time-division multiplexing of modulation data pieces (Nc-number of data pieces) of each channel (see reference character 182 in FIG. 3), and then outputs Nc-number of modulation data pieces to the S/P converter 11 (see step S3 in FIG. 2 and the arrow 183 in FIG. 3).

In this instance, the channel multiplexing controller 18 counts up the value of internal counter upon an input of Nc-number of modulation data pieces (A, B, C, ...) of each channel to the channel multiplexer 10 as described above. Here, if such counting up makes the value exceed Nsf, the channel multiplexing controller 18 resets the value to "0" (see step S4 of FIG. 2 and the reference character 184 of FIG. 3). In this instance, Nsf means a upper limitation value of the number of OFDM symbols. The number of OFDM symbols in a case of short GI subframe is seven, and the number of OFDM symbols in a case of long GI subframe is six, as described above.

On the other hand, the serial/parallel converter 11 converts time-division multiplexed signals (Nc-number of modulation data pieces) input from the channel multiplexer 10, and maps them to each subcarrier, and then outputs them to the IFFT 12 (step S5 of FIG. 2). The IFFT 12 performs an IFFT operation to Nc-number of mudulation data pieces mapped to each subcarrier, and outputs effective symbols to the guard interval inserter 13 (see step S6 of FIG. 2 and arrow 185 of FIG. 3).

Then, the guard interval length controller 19 outputs a guard interval length (Ngi_pre) to be added to the head of an effective symbol and a guard interval length (Ngi_post) to be added to the end of the effective symbol, as a guard interval addition request, to the guard interval inserter 13 (see the arrow 186 of FIG. 3).

Here, it is assumed that in a case where the current (determined by the transmission subframe format determiner 17) transmission subframe (format) is a short GI subframe (S), (Ngi_pre, Ngi_post) = (Ngi_s, 0), and that in a case where the current transmission subframe is a long GI subframe (L), (Nig_pre, Ngi_post) = (Ngi_s, Ngi_l- Ngi_s). In this instance, if the current transmission subframe (format) is a long GI subframe with an internal counter value other than "0" (that is, in a case where an effective symbol which is a subject of GI insertion is not the head of the subframe), (Ngi_pre, Ngi_post) = (Ngi_l, 0), and insertion of a guard interval before the effective symbol is instructed (see step S7 of FIG. 2).

Upon reception of the above mentioned instruction (guard interval addition request), the guard interval inserter 13 copies the end portion Ngi_pre [sample] of the effective symbol input from the IFFT 12, and adds what is copied to the head of the effective symbol (see the reference character 187 of FIG. 3). The guard interval inserter 13 also copies the front portion Ngi_post [sample] of the effective symbol, and adds what is copied to the end of the effective symbol (see reference character 188 of FIG. 3), and then output the effective symbol to the radio unit 14 (see step S8 and the arrow 189 of FIG. 3).

After that, the guard interval length controller 19 counts up the internal counter (if exceeds Nsf, the value is reset to the initial value of "0") (see step S9 of FIG. 2 and the reference character 190 of FIG. 3).

On the other hand, the radio unit 14 performs predetermined radio processing, such as up conversion processing, onto the OFDM symbols from the guard interval inserter 13, and then transmits thus obtained transmission radio signals from the transmitter antenna 15 to a propagation path (see step S10 of FIG. 2 and the reference character 191 of FIG. 3).

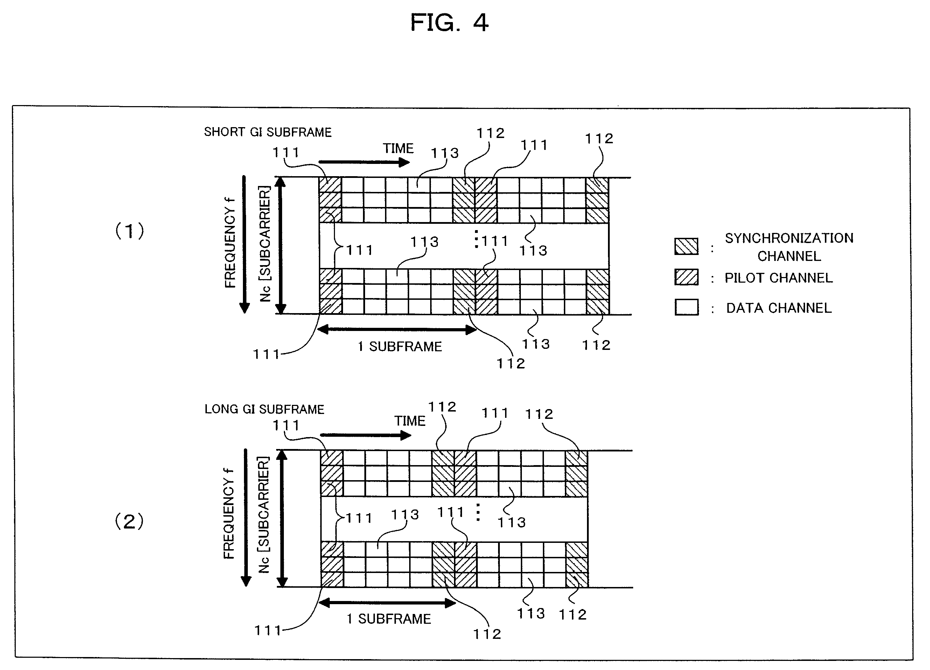

Thereafter, the processing already described is repeated, downlink radio signals thereby being transmitted in the short GI subframe format shown in (1) of FIG. 4 and (2) of FIG. 5 or in the long GI subframe format shown in (2) of FIG. 4 and (1) of FIG. 5. In this instance, both of (1) and (2) of FIG. 4 express the subframe formats in two-dimensional allocation with time and the subcarrier (frequency); both of (1) and (2) of FIG. 5 express the subframe format in the time domain.

In other words, as understandable from (1) and (2) of FIG. 4, in any case of the formats, a short GI subframe and a long GI subframe, in each subcarrier, a pilot channel (see the diagonally shaded area 111) is allocated (time-division multiplexed), and a data channel (see the reference character 113) is then allocated. After that, downlink radio transmission signals are transmitted in a subframe format in which a synchronization channel (SCH) (see the diagonally shaded area 112) allocated at the end of the subframe. Further, as understandable from (1) and (2) of FIG. 5, at least a guard interval (GI: see the reference character 115) of a fixed GI length (Ngi_s) is always inserted before an effective symbol (pilot channel: see the reference character 114) which is multiplexed to the head of a subframe, regardless of whether the subject subframe is a short GI subframe or a long GI subframe, and the above described radio transmission signals are transmitted. In this instance, as to effective symbols other than that of the head of a subframe, a guard interval of an original GI length Ngi_s or Ngi_l is inserted before each effective symbol.

Accordingly, as explained hereinbelow, the mobile station terminal 2, if it does not know whether the subframe format of a reception signal has a short GI subframe or a long GI subframe, sets the beginning position of an FFT window to after the time corresponding to the above fixed GI length from the leading timing of the subframe, and then begins FFT processing, thereby making it possible to perform FFT processing in an appropriate time division with respect to at least the leading symbol (pilot symbol), so that pilot channel extraction and scramble code detection afterward will be able to be performed appropriately.

b) Mobile Station Terminal:

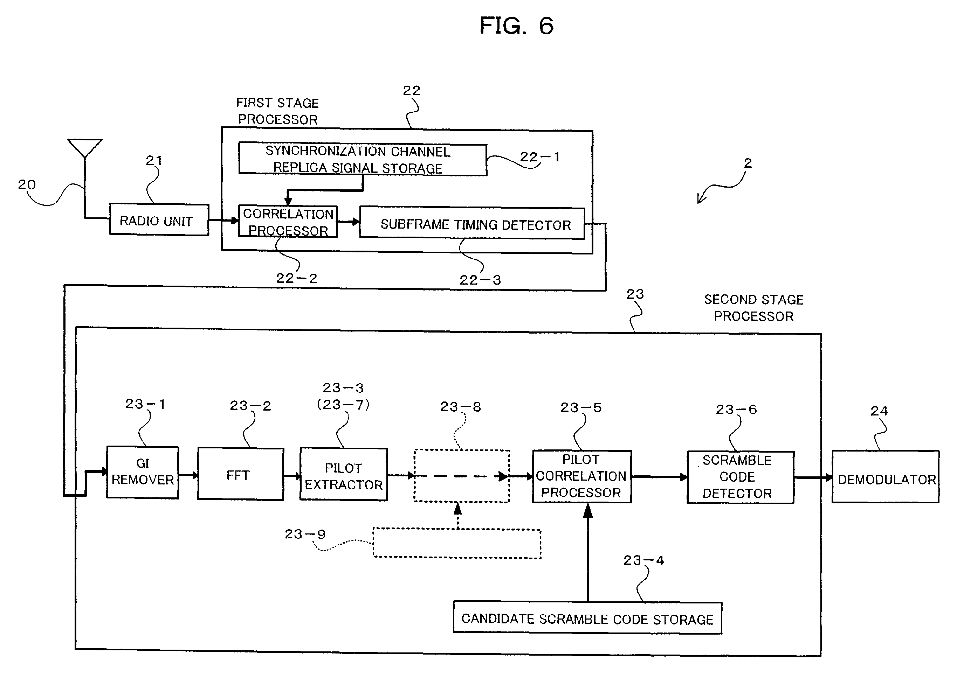

Next, a description will be made hereinafter of the construction of a mobile station terminal 2 and its operation. FIG. 6 is a block diagram illustrating the construction of a mobile station terminal in the OFDM communications system. The mobile station terminal 2 of FIG. 6 includes, for example: a first stage processor having, for example, a reception antenna 20, a synchronization channel replica signal storage 22-1, a correlation processor 22-2, and a subframe timing detector 22-3; a second stage processor 23 having a GI remover 23-1, an FFT 23-2, a pilot executor 23-3, a candidate scramble code storage 23-4, a pilot correlation processor 23-5, and a scramble code detector 23-6; and a demodulator 24.

Here, the reception antenna 20 receives a radio signal from the above described base station 1. The radio unit 21 performs predetermined radio reception processing such as down conversion of the radio signal received by the reception antenna 20. The first stage processor 22 detects subframe timing based on a correlation between a reception signal from the radio unit 21 and a replica signal of the synchronization channel (SCH), which is a known pattern, as the first stage processing of cell search.

Thus, in the first stage processor 22, the synchronization channel replica signal storage 22-1 stores replica signals of the synchronization channel beforehand; the correlation processor 22-2 obtains a correlation between the above reception signal and the replica signals stored in the synchronization channel replica signal storage 22-1. The subframe timing detector 22-3 detects the subframe timing of the reception signal based on results of correlation processing performed by the correlation processor 22-2. For example, it is possible to detect timing with which the largest correlation is shown as subframe timing.

Further, the second stage processor 23 performs fast Fourier transformation (FFT) processing based on the subframe timing detected by the first stage processor 22 to extract a pilot channel and detect a scramble code. Hence, in the second stage processor 23, the GI remover 23-1 removes a guard interval inserted into a reception signal based on the subframe timing detected by the subframe timing detector 22-3. Here, in the present example, as already described, on the base station 1, at least a guard interval of a fixed GI length (Ngi_s) is always inserted before an effective symbol of the head of a transmission subframe, regardless of whether it is a short GI subframe or a long GI subframe, so that a guard interval of the fixed GI length of at least the head of the subframe is removed.

The FFT 23-2 performs FFT processing to the effective symbol whose guard interval has been removed in a predetermined time division (at least effective symbol length time), that is, in an FFT window, thereby converting a time domain reception signal into a frequency domain signal. In the present example, as already described, the FFT 23-2 sets the start position of an FFT window after a lapse of the time corresponding to the fixed GI length (Ngi_s) from subframe timing before starting FFT processing, so that it is possible to always perform FFT processing at appropriate time divisions regardless of whether the subframe is a short GI subframe or a long GI subframe.

The pilot extractor 23-3 extracts a pilot channel signal (pilot symbol) from the frequency domain signal after being subjected to FFT processing performed by the pilotextractor23-3. The candidate scramble code storage 23-4 stores candidate scramble codes (pilot replicas) for use in correlation processing by the pilot correlation processor 23-5. The pilot correlation processor 23-5 obtains correlation between the pilot symbol extracted by the pilot extractor 23-3 and the candidate scramble codes stored in the candidate scramble code storage 23-4.

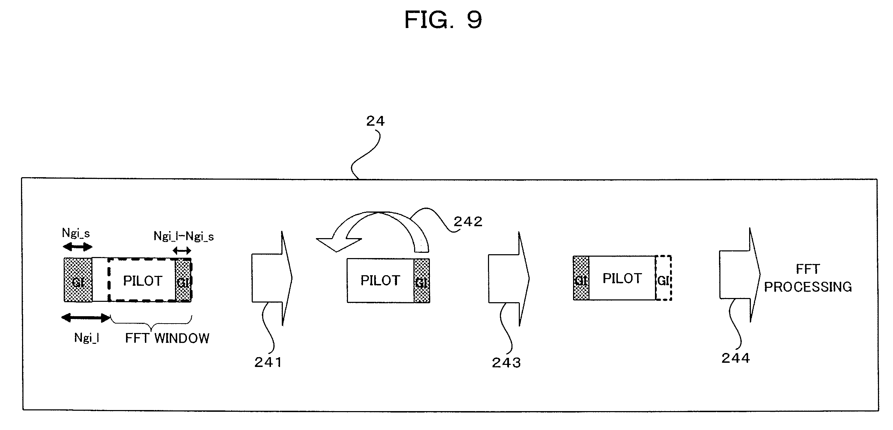

The scramble code detector 23-6 detects a scramble code based on correlation processing results in the pilot correlation processor 23-5. For example, a candidate scramble code which shows the largest correlation can be made to be a detected scramble code. Then, the demodulator 24 performs descrambling processing using a scramble code detected by the scramble code detector 23-6 and predetermined reception signal demodulation processing including FFT processing of effective symbols. In this instance, in the present example, the GI length before the effective symbol of the head of a subframe is fixed, not dependent on the difference of subframe formats having different GI lengths. Because of this, the GI length can become shorter than the original GI length, causing the possibility of performance deterioration due to delay waves. However, this issue can be avoided by means of performing processing described below with reference to FIG. 9.

Hereinafter, a description will be made of an operation (cell search method) of a mobile station terminal 2 (hereinafter, also simply called "mobile station 2" according to the present embodiment with the above described construction. In the present example, also, the mobile station 2 detects correlation with the replica of a time signal of a synchronization channel (SCH), which is a known pattern, and, for example, the timing indicating the largest correlation value is employed as subframe timing (step S21).

That is, on the mobile station 2, the receiver antenna 21 receives a radio signal from the base station 1, and the radio unit 21 performs predetermined radio processing such as down conversion or the like. After that, on the first stage processor 22, the correlation processor 22-2 obtains correlation of the reception signal with the replica signals of the synchronization channel (SCH) stored in the synchronization channel replica signal storage 22-1, and the subframe timing detector 22-3 detects timing with which the result (correlation value) becomes the largest value as subframe timing.

Then, in the second stage processor 23, the GI remover 23-1 removes $Nig\_s$ [sample] of the reception signal from the subframe timing detected by the subframe timing detector 22-3 regardless of a subframe format of a signal currently being received, as described above, and the FFT 23-2 performs FFT processing to execute conversion of the signal into a frequency domain signal.

In this manner, according to the present example, when FFT processing of a symbol of the head of a subframe is performed, a guard interval of $Ngi\_s$ [sample] is always removed from subframe timing regardless of difference between subframe formats of reception signals (whether the subject subframe is a short GI subframe or a long GI subframe), so that it is always possible to perform FFT processing in an appropriate time division (FFT window) without causing sample deviation.

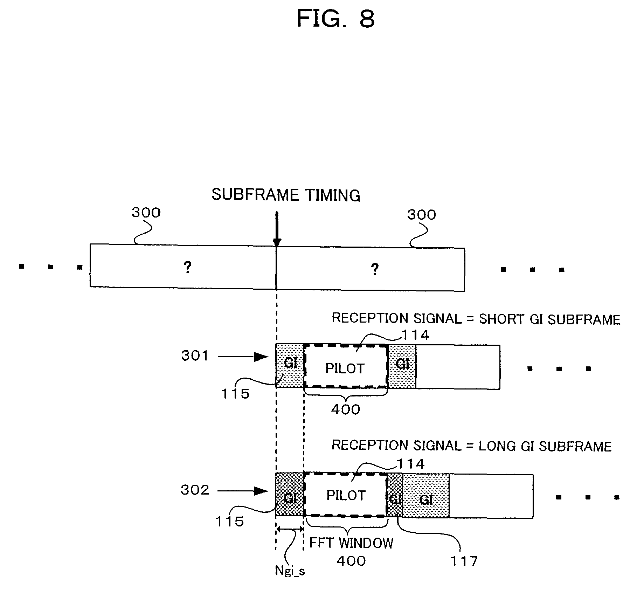

That is, as shown in FIG. 8, even when it is impossible to distinguish whether the subframe format of a reception signal (see the reference character 300) is a short GI subframe format or a long GI subframe format, and even when the time division (FFT window shown with the dotted line block 400) of FFT processing to a short GI subframe is optimized with respect to an effective symbol (pilot symbol) interval, if the reception signal 300 is a long GI subframe (see the reference character 302), a guard interval of a GI length $Ngi\_s$ being the same as that in a case of a short GI subframe is inserted, so that it is possible to perform FFT processing without causing sample deviation of the effective symbol (pilot symbol) in the same FFT window 400.

Here, the reception signal after being subjected to FFT processing is input to the pilot extractor 23-3, and the pilot extractor 23-3 extracts a pilot symbol from a subcarrier to which a pilot channel has been multiplexed. After that, the pilot correlation processor 23-5 obtains correlation between the extracted pilot symbol and candidate scramble codes stored in the candidate scramble code storage 23-4, and then, the scramble code detector 23-6 makes a candidate scramble code obtaining the maximum correlation value to be the detected scramble code (step S22).

In this instance, the detected scramble code is used in demodulation processing after radio link coupling by the demodulator 24. Here, as schematically shown in FIG. 9, in demodulation processing of the effective symbol (pilot symbol) of the head of a long GI subframe by the demodulator 24, after radio link coupling, only the leading portion of a GI length $Ngi\_l$ [sample] of the long GI subframe is removed (see the arrow 241), and the end portion of a GI length $Ngi\_l - Ngi\_s$ [sample] of the symbol is moved (cut & paste) before the symbol (see the arrows 242 and 243), and then, the above-described FFT processing is performed (see the arrow 244).

Hereby, even if the length of a guard interval which is added before the leading symbol of a long GI subframe on the base station 1 end is shorter than the original length ($Ngi\_l$), the effect (performance deterioration reduction effect due to a delay wave) is not resultantly different from a symbol to which a long GI subframe of an original GI length ($Ngi\_l$) is added.

As described above, according to the present embodiment, in FFT processing performed upon detection of a scramble code on the second stage of cell search by the mobile station 2, it is always possible to perform FFT processing in an appropriate time division (FFT window), without causing sample deviation, by means of removing a guard interval of $Ngi\_s$ [sample] from subframe timing regardless of difference of the subframe format of reception signals (whether they have a short GI subframe or a long GI subframe). In consequence, appropriate pilot channel extracting processing and scramble code detection processing can be realized.

Accordingly, even in a case where subframe formats of multiple guard interval lengths are present in a mixed condition thereof, it is possible to realize appropriate cell search processing without causing increase in the scale or the complexity of the construction of the mobile station 2, so that the mobile station 2 can be simplified and performance at the time of cell search processing can be improved. In addition, since the number of candidates in the scramble code detector 23-6 does not (does not necessary to) increase, an erroneous detection rate due to increase in the number of candidates is able to be restrained, and performance improvement can be expected.

In this instance, although guard intervals are controlled to be mapped in such a manner that the positions of beginning of the effective data of the leading symbol of the subframes are apart from frame timing by the same amount in the above described case, guard interval mapping can also be performed in such a manner that the positions of beginning of effective data from subframe timing are apart from frame timing by the same amount. For example, a guard interval can be mapped in such a manner that the effective data beginning position of the third symbol and that of the second symbol are apart from frame timing by the same amount. In such a case, pilots are multiplexed to the effective data whose effective data beginning positions are apart from frame timing by the same amount.

[B] Second Embodiment:

The mobile station 2 receives broadcasting information (transmitted from the base station 1 in cyclic through a broadcasting information channel) containing information unique to a cell after detection of a scramble code of the above mentioned base station 1. In the already described first embodiment, it is possible to perform FFT processing in an appropriate time division to detect a scramble code, regardless of difference in the length of a guard interval inserted into a subframe which is being received. However, information (as to which GI length the subframe has) about subframes being received is sill unknown. Thus, at the time broadcasting information is demodulated, all the candidate GI lengths (Ngi_s and Ngi_l) are necessary to be subjected to processing.

According to the first embodiment, only information (pilot channel) identifying a cell is allocated at the head of a subframe. However, generally speaking, it is sufficient to insert a pilot channel (symbol) at the rate such that the channel estimation accuracy at the time of demodulation processing is secured sufficiently. Here, for example, it is assumed that pilot symbol insertion at 1 subcarrier intervals can realize the sufficient channel estimation accuracy at the time of demodulation.

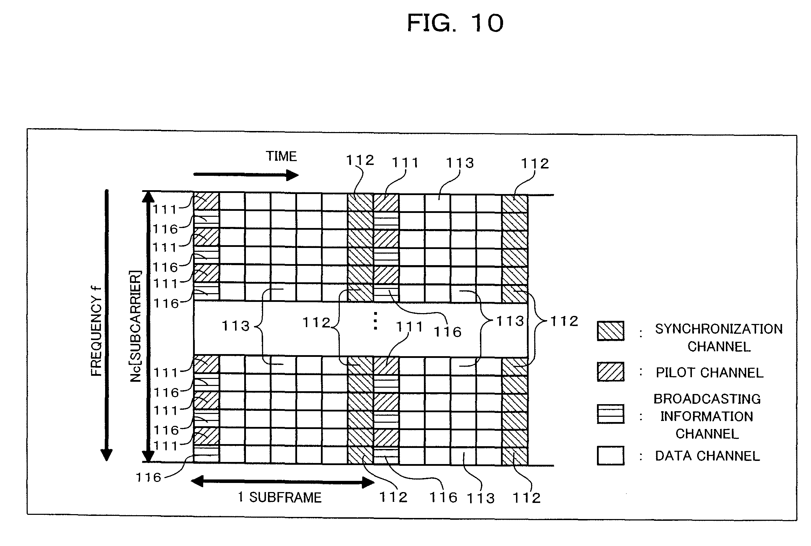

Therefore, on the base station 1, as shown in FIG. 10, for example, a broadcasting information channel (BCH), which is indicated by the reference character 116, is allocated (multiplexed) to a subcarrier without a pilot symbol (see the diagonally shaded area 111) of the head of the subframe inserted thereto, not a data channel (see the reference character 113). In this instance, the reference character 112 indicates a synchronization channel (SHC) also in the present example.

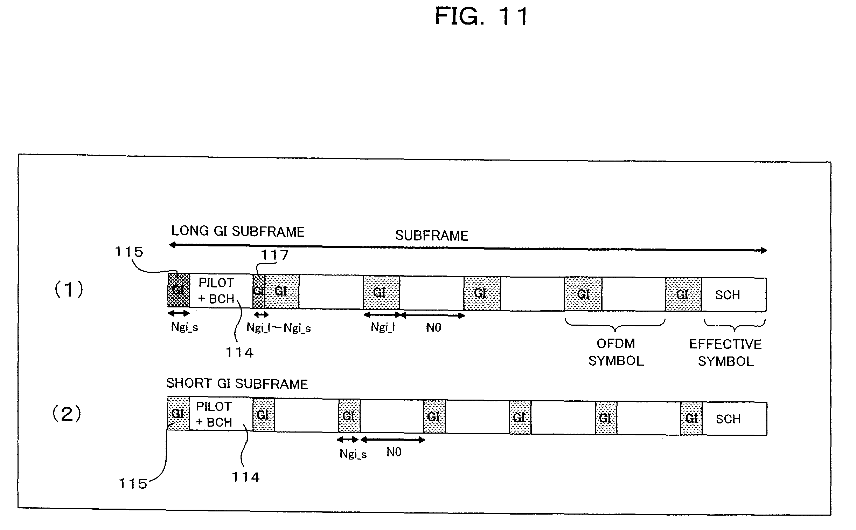

Here, FIG. 10 shows subframe formats in a two-dimension allocation with time and subcarrier (frequency). If the subframe formats are shown in the time domain, it becomes what is shown in FIG. 11, like FIG. 5. That is, in FIG. 11, (1) of FIG. 11 shows a long GI subframe format; (2) of FIG. 11 shows a short subframe format. In any of the formats, a pilot symbol and a broadcasting information channel (BCH) (hereinafter, will also simply called "broadcasting information") are multiplexed (frequency-division multiplexed) to the head portion of the effective symbol (see the reference character 114).

In this instance, the other frame constructions are the same as those of FIG. 5. Like in the first embodiment, in a case of a long GI subframe and also in a case of a short GI subframe, a guard interval of the same GI length Ngi_s is inserted (time-division multiplexed) (see the reference character 115) to before the effective symbol of the head of the subframes, and a guard interval of a GI length (Ngi_l - Ngi_s) remained after subtracting a GI length (Ngi_s) which is addedbefore the effective symbol from the original GI length Ngi_l is inserted into the end of the leading long GI subframe (see the reference character 117).

Accordingly, on the base station 1, information used for forming the subframe formats shown in FIG. 10 and FIG. 11 is stored in the subframe format storage 16, which is already described with reference to FIG.1) beforehand. On the basis of the stored information, the channel multiplexing controller 18 controls time-division multiplexing of various channels including the above mentioned broadcasting channel. As a result, basically, it becomes possible to realize transmission in subframe formats shown in FIG.10 and FIG. 11 without any changes added to the construction of FIG. 1.

In this case, since the positions of the effective symbols to which broadcasting information is multiplexed are apart from the subframe timing by the same amount in the long GI subframe and the short GI subframe, even if information relating to a GI length is unknown, the mobile station 2 is capable of performing FFT processing to the effective symbol, that is, a pilot symbol and broadcasting information, of the head of the subframe in an appropriate time division with a construction and processing equal to those of the first embodiment, thereby realizing appropriate cell search processing and reception processing of broadcasting information (demodulation processing).

Here, if information (GI length itself or information relating to transmission patterns of subframes of different GI lengths) relating to the GI length of a subframe transmitted by the base station 1 are included as the above mentioned broadcasting information, demodulation processing thereafter performed by the demodulation processor 24 is able to be performed based on GI length information obtained by demodulating the broadcasting information. In this instance, the amount of information transmittable by the broadcasting information is limited. Thus, if the amount of information to be transmitted exceeds the information amount transmittable as one piece of broadcasting information, the base station 1 is capable of making the information divided and contained in multiple subframes.

Other operations of the base station 1 and the mobile station 2 are the same as those of the first embodiment. In this instance, although the mapping of guard intervals is controlled in such a manner that the effective data beginning positions of the leading symbols of the subframes are apart from frame timing by the same amount in the above description, the mapping of guard intervals can also be controlled in such a manner that the effective data beginning positions are apart from frame timing by the same amount with respect to the second symbol and those of thereafter. For example, the mapping of guard intervals can be controlled in such a manner that the effective data beginning positions of the third symbol of a short GI subframe and of the second symbol of a long GI subframe are apart from frame timing by the same amount. In such a case, a pilot and broadcasting information are multiplexed to the effective data whose effective data beginning positions are apart from frame timing by the same amount.

[C] Third Embodiment:

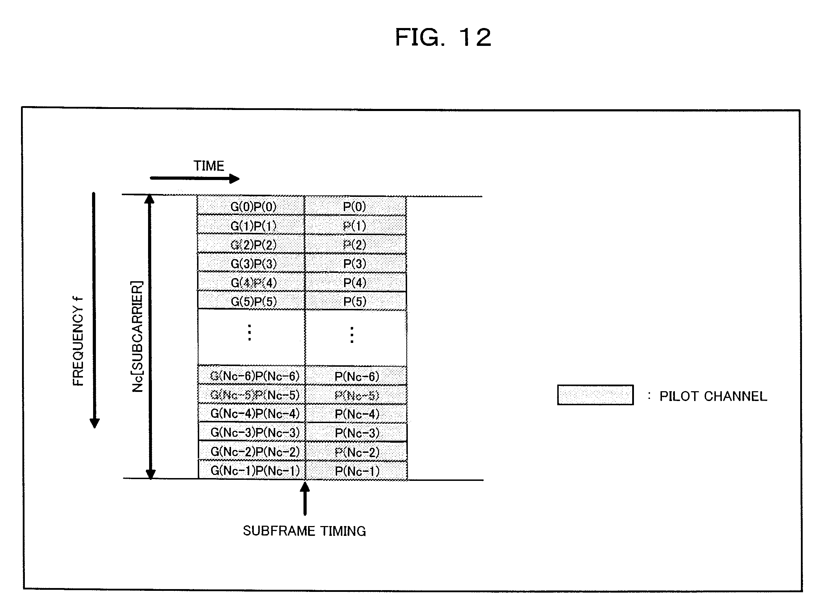

According to the already described technology (three-stage high-speed cell search method) proposed in the above non-patent document 3, which is cited as a previous art, as shown in Fig. 12, for example, a pilot symbol is multiplexed to the head and the end of a subframe. As the pilot symbol of the end of a frame, a pattern (scramble code group information) G(i)P(i) obtained by multiplying the leading pilot pattern P(i) (i = 0 through Nc - 1) by a group code G(i), which is information for specifying (identifying) a scramble code group, is used. In this FIG. 12, a pilot symbol is multiplexed to all the subcarriers, but multiplexing can be performed with thinning down of subframes, such as to every other subcarrier.

The following will be a description of an overview of cell search processing in this technology. On the first stage, symbol timing is detected utilizing a correlation characteristic of a guard interval; on the second stage, subframe timing and a scramble code group are detected utilizing pilot symbols each allocated before and after a subframe, respectively. Then, after FFT processing, in each subcarrier, multiplication is performed by using one of the symbols adjacent to each other in terms of time as a complex conjugate, as shown in the following formula (1). This makes it possible to extract a group code G(i) in a case of subframe timing.

$$G(i)P(i) \times P^*(i) = \left| P(i) \right|^2 G(i) \qquad \ldots \ (1)$$

Accordingly, in all the candidate sub-fame timing, a correlation with a candidate group code is obtained with respect to a series obtained by multiplication of a complex conjugate of symbols adjacent to each other in respect to time, and subframe timing and a group code G(i) which obtains the maximum correlation are determined to be detection values.

Then, on the third stage, by means of obtaining correlation between the candidate scramble codes contained in the group detected on the second stage, a subj ect scramble code is detected.

However, this technology is on the assumption of using a subframe format having a fixed GI length in the system. Thus, in a case where the technology is applied to the system in which subframe formats of multiple GI lengths are mixed, the following issues are caused as described above.

That is, a group code is demodulated by a pilot of the head of an adjacent subframe in terms of time. When multiple subframes of different GI lengths are mixed, it is necessary to perform demodulation processing to all the candidate guard interval lengths by using a pilot symbol which has been subjected to FFT processing. In addition, in this case, increase in the amount of processing and increase of the number of candidates at the time of detection thereof lead to deterioration of performance.

In contrast, in the above described embodiment of the present invention, since at least the position of an effective symbol to which a pilot symbol is multiplexed does not depend on the GI lengths of different formats (whether the format is a long GI subframe format or a short GI subframe format), it is always possible to execute uniform processing. Thus, the issues of the above previous art are resolved by utilizing such a characteristic of the above described embodiment.

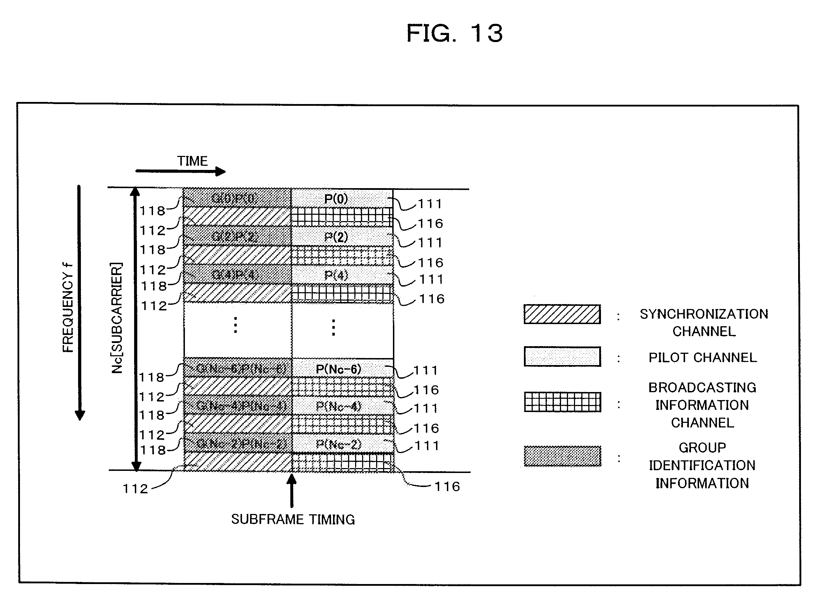

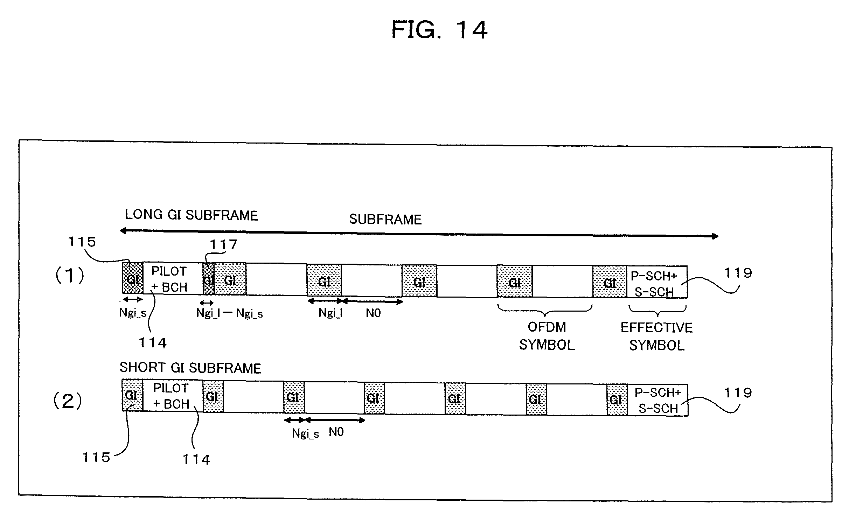

That is, in the present example, the format shown in FIG. 13 and FIG. 14 is applied as a subframe format. Here, FIG. 13 shows a subframe format in the two-dimensional manner with frequency f and time t, with an attention paid to an effective symbol at the end of the subframe which is antecedent to the other subframe, out of the two subframes adjacent to each other in terms of time, and to the leading effective symbol of the subframe which is subsequent one in terms of time. FIG. 14 expresses the subframe formats in the time domain.

Then, as shown in FIG. 13, in the present example, a pilot channel 111 is inserted into the effective symbol of the head of a subframe at every other subcarrier intervals, and a broadcasting information channel (BCH) 116 is inserted into the remaining subcarriers. Group identifying information (S-SCH) 118 is inserted into the effective symbol of the end of the subframe, and also, a synchronization channel (P-SCH) 112 is inserted into the remaining subcarriers.

That is, in the time domain expression of FIG. 14, a pilot channel and a broadcasting information channel (BCH) are frequency-division multiplexed to the effective symbol indicated by the reference character 114 with respect to both of the long GI subframe shown in (1) of FIG. 14 and the short GI subframe show in (2) of FIG. 14. In addition, a synchronization channel (P-SCH) and a group identifying information (S-SCH) are frequency-division multiplexed to the effective symbol indicated by the reference character 119 of the end of the subframe.

In this instance, in the present example, also, a patternG(i)P(i) obtained by multiplying a code G(i) unique to a group by a pilot pattern P(i) of the pilot channel 111 adjacent to the code G(i) in terms of time is used as group identifying information (S-SCH) 118. Further, as a code G(i) unique to a group, an orthogonal code, for example, a Walsh code is used. Even if such a subframe having the above described construction (format) is employed, it is basically possible to realize transmission in the subframe format shown in FIG. 13 and FIG. 14 with a construction similar to that of FIG. 1, with the subframe format storage 16 which stores information for forming the subframe format shown in FIG. 13 and FIG. 14 beforehand, and with the channel multiplexing controller 18 which controls time-division multiplexing processing of each channel containing information that is necessary in forming the subframe format shown in FIG. 13 and FIG. 14.

On the other hand, on the mobile station 2, similar to the first embodiment, subframe timing is detected utilizing the synchronization channel (SCH) as the first stage processing. That is, it is possible to detect subframe timing with a construction equal to the construction of the first stage processor 22 shown in FIG. 1.

As the second stage processing, a reception signal is subjected to FFT processing using the thus detected subframe timing and is converted into a frequency domain signal. After that, group identifying information and a pilot channel is extracted. Then, as shown in the above formula (1), correlation is taken between (i) a series obtained (demodulated) by multiplying the group identifying information by a complex conjugate of the pilot channel adjacent in terms of time and (ii) a candidate group code. For example, a group obtaining the maximum correlation value may be identified as a detected group.

At that time, according to the present invention, as shown in FIG. 14, since the position of the effective symbol to which a pilot channel P(i) is multiplexed does not depend on the GI length of subframes (whether the subframe is a long GI subframe or a short GI subframe), the above mentioned FFT processing is able to be performed to an effective symbol division to which a pilot channel is multiplexed always in an appropriate FFT window.

Accordingly, even in a case where subframes of different GI lengths are present in a mixed manner thereof, it is possible to avoid deterioration of performance due to increase of the amount of processing and increase of the number of candidates at the time of candidate detection.

In this instance, in the third stage processing, correlation between a pilot channel and candidate scramble codes contained in the group which is detected (identified) in the second stage is obtained, a scramble code thereby being detected.

That is, in the construction of the mobile station 2 shown in FIG. 6, for example, the processing in the second stage and the third stage is able to be realized by a construction including: a pilot/group identifying information extractor 23-7, which extracts a pilot channel and information for identifying a group, in place of the pilot extractor 23-3; a candidate group code storage 23-9 provided for the previous stage of the pilot correlation processor 23-5; and a group identifying processor 23-8, which performs an arithmetic operation of the above formula (1) using candidate group codes stored in the candidate group code storage 23-9 for identifying a subject group.

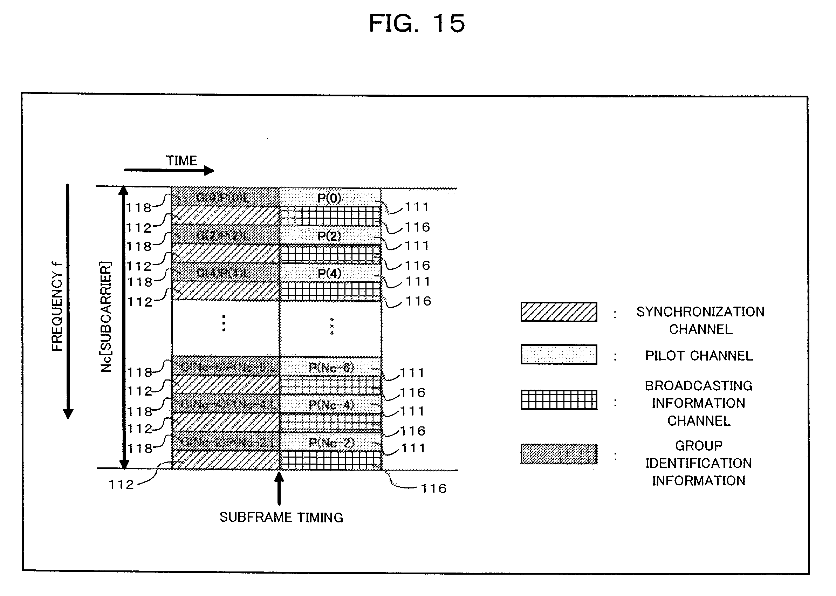

In this instance, as shown in FIG. 15, the group identifying information 118 contains information relating to GI lengths by multiplication of information L for identifying (distinguishing) a subframe format (hereinafter will be called subframe format information) (for example, L = 1, in a case of a short GI subframe; L = -1, in a case of a long GI subframe), thereby making it possible to identify a group and to detect subframe format information, that is, the GI length (whether the subframe is a short GI subframe or a long GI subframe) which is being received.

That is, subframe format information is able to be detected by means of deciding, for example, the polarity of the maximum correlation value out of values of correlation with a code unique to a candidate group. In this case, since a subframe format is already detected at the time of scramble code processing, merits of a long guard interval are capitalized on in a case of a long GI subframe at the time of scramble code processing in the next stage, and thus, the performance of processing in the third stage are improved. Here, increase of the number of candidates in processing in the second stage (the number of groups x the number of subframe formats) makes it difficult to improve performance of processing in the second stage.

In this instance, although information to be transmitted as a broadcasting information channel is not specified in the present example, if the broadcasting channel contains information relating to transmission patterns or the like of the subframes of different lengths in addition to the above subframe format information L which is being transmitted by the base station 1, it becomes possible to perform demodulation processing after cell search in accordance with different GI lengths based on the transmission patterns, so that an advantage of improvement of performance is brought about.

[D] Fourth Embodiment:

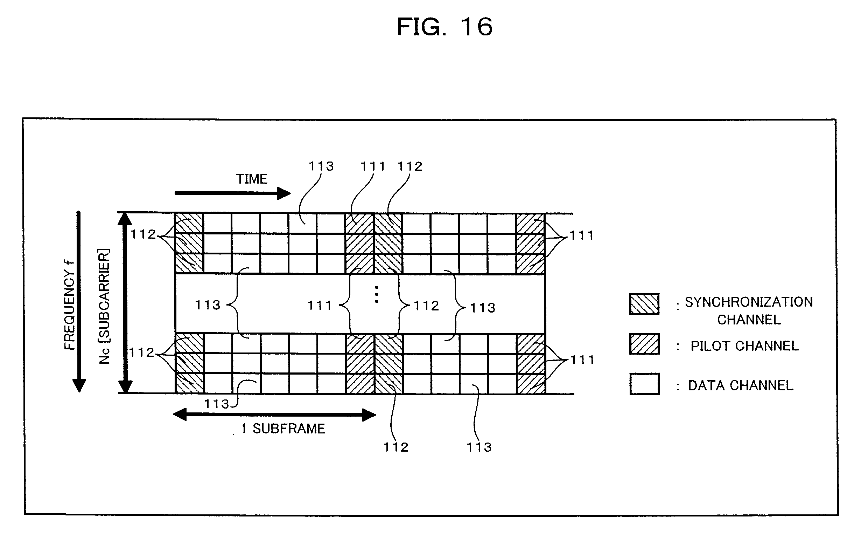

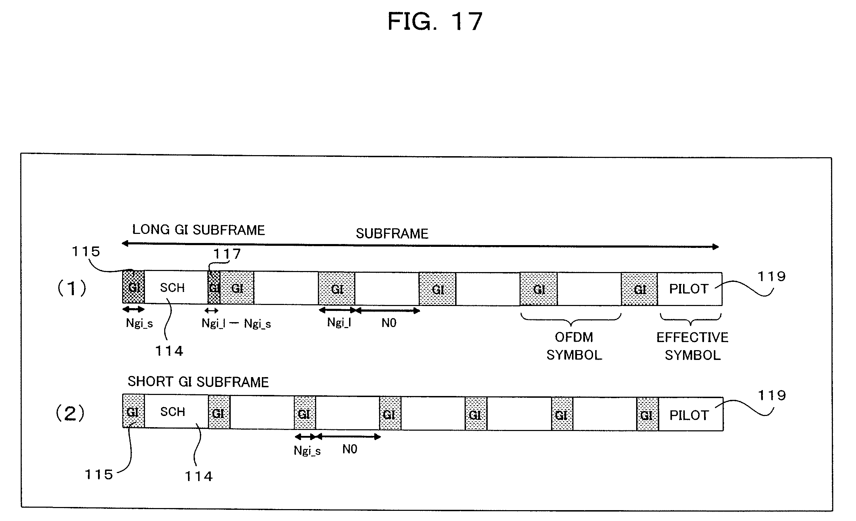

In the above described embodiments, a pilot channel is mapped (multiplexed) to the effective symbol of the head of a subframe, and a synchronization channel (SCH) is multiplexed to the effective symbol at the end of the subframe. However, such relationships can be exchanged. For example, as shown in FIG. 16 and FIG. 17, a synchronization channel (SCH) can be multiplexed to the effective symbol of the head of a subframe (see the diagonally shaded area 112 of FIG. 16 and the reference character 114 of FIG. 17), and a pilot channel can be multiplexed to the effective symbol at the end of the subframe (see the diagonally shaded area 111 of FIG. 16 and the reference character 119 of FIG. 17). In this instance, the reference character 113 indicates a data channel also in the present example.

Here, FIG. 16 expresses a subframe format in the two-dimensional allocation with time and a subcarrier (frequency). (1) of FIG. 17 shows a long GI subframe format; (2) of FIG. 17 shows a short GI subframe format. Further, in the present example, also, as shown in (1) of FIG. 17, a guard interval of a GI length equal to a GI length Ngi_s of a short GI subframe is multiplexed to the head of the effective symbol of a long GI subframe (see the reference character 115), and a guard interval of a GI length of (Ngi_1 - Ngi_s), which is a remained portion obtained by subtracting a GI length Ngi_s that is multiplexed to the end of the effective symbol from the original GI length Ngi_1, is multiplexed to the head of the effective symbol of the long GI subframe (see the reference character 117).

As to a subframe having the above described construction (format), also, it is basically possible to realize transmission in the subframe format shown in FIG. 16 and FIG. 17 with a construction similar to that of FIG. 1, in which the subframe format storage 16 stores information for forming the subframe format shown in FIG. 16 and FIG. 17 beforehand, and the channel multiplexing controller 18 controls time-division multiplexing processing of each of the above mentioned various channels.

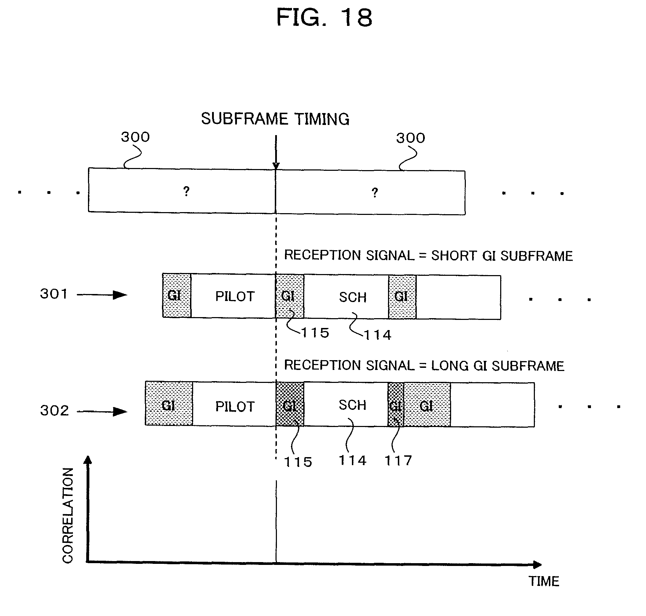

By using such a subframe format, on the reception end (mobile station 2), the position of multiplexing of the synchronization channel (SCH) is fixed, independent of whether a reception signal from the base station 1 is a long GI subframe or a short GI subframe, as schematically shown in FIG. 18, for example, so that subframe timing is able to be detected with ease and reliability.

That is, for example, as schematically shown in FIG. 18, even in a case where it is unknown whether the subframe format of a reception signal (see the reference character 300) is a short GI subframe format (see the reference character 301) or a long GI subframe format (see the reference character 302), it is possible to detect timing showing the maximum correlation value in the correlation processor 22-2 (see FIG. 6) with ease and reliability, since a guard interval (see the reference character 115) of the same GI length Ngi_s is inserted to before the leading effective symbol of any of the subframes.

Further, in this case, since a pilot channel is multiplexed to the effective symbol of the end of the subframe, it is sufficient that the FFT 23-2 (see FIG. 6) performs FFT processing in an invariant FFT window regardless of the type of the subframe format of a reception signal, so that it is unnecessary to perform FFT processing in multiple FFT window candidates.

In this manner, according to the present example, multiplexing of a pilot channel to the effective symbol of the end of a subframe makes it possible to capitalize on merits of a long guard interval added, in comparison with the first embodiment, at the time of detection processing of a scramble code performed by the scramble code detector 23-6 (see FIG. 6), and performance improvement can be expected.

In this instance, according to the above embodiment, the GI length to be multiplexed to the head of the effective symbol of a long GI subframe is adjusted to the GI length (the minimum GI length) Ngi_s, for the purpose of making the mulplexing position of the effective symbol (pilot channel or synchronization channel) fixed. However, contrary adjustment is also available such that the GI length to be multiplexed to the head of the effective symbol of a short GI subframe is adjusted to the GI length Ngi_1 used in a long GI subframe.

Further, in a case where three or more subframes of different GI lengths are present in a mixed condition thereof, it is sufficient that at least the GI length is adjusted in such a manner that a guard interval of the same GI length is multiplexed to the leading symbol of each subframe (the GI length can be adjusted to that which is used in any of the subframes, and also, a fixed GI length can be determined for each subframe).

Furthermore, in the above described embodiments, although adjustment of the GI length is performed to the effective symbol of the head of a subframe, the similar GI length adjustment can be performed to the effective symbol other than the leading effective symbol of the subframe.

In addition, in the above description, although a guard interval mapping is controlled in such a manner that the effective data beginning positions of the leading symbols of the subframes are apart from frame timing by the same amount, guard interval allocation can also be controlled in such a manner that the effective data beginning positions are apart from subframe timing by the same amount with respect to the second symbol or those thereafter. For example, guard interval mapping can be controlled in such a manner that the effective data beginning positions of the third symbol of a short GI subframe and the second symbol of the long GI subframe is apart from subframe timing by the same amount as that by which the effective data beginning position of the second symbol of a long GI subframe is apart from subframe timing. In such a case, synchronization channels are multiplexed to effective data whose positions are apart from the subframe timing by the same amount.

[E] Fifth Embodiment:

The following formula (2) expresses discrete Fourier transform (DFT) of a signal in which $g_k$ is cyclically shifted by $\Delta k$ [sample],

$$\sum_{k=0}^{N-1} g_{k-\Delta k} (e^{-j\frac{2\pi}{N}})^{nk}$$

$$= \sum_{k=0}^{N-1} g_{k-\Delta k} (e^{-j\frac{2\pi}{N}})^{n(k-\Delta k)} (e^{-j\frac{2\pi}{N}})^{n\Delta k} \qquad \cdots \quad (2)$$

$$= G_n (e^{-j\frac{2\pi}{N}})^{n\Delta k}$$

where $g_k$ is a time domain signal of an effective symbol (here, $k$ indicates time [sample]; $0 \le k \le N - 1$); $N$ indicates the DFT size.

Here, in the above formula (2), $G_n$ is expressed by the following formula (3), and is a series of a frequency domain with an effective symbol subjected to DFT. In this instance, $n$ is the number of the subcarriers, and $0 \le n \le N - 1$.

$$G_n = \sum_{k=0}^{N-1} g_k (e^{-j\frac{2\pi}{N}})^{nk} \qquad \cdots \quad (3)$$

That is, a series in the frequency domain of a signal in which an effective symbol is cyclically shifted by $\Delta k$ [sample] is equal to a series obtained by giving phase rotation to a series in the frequency domain of an effective symbol by $2\pi\Delta k / N$ per subcarrier in the frequency direction.

Accordingly, in the above described first embodiment, it can be considered that the leading OFDM symbol of a long GI subframe, a guard interval is added before and after thereof, is an OFDM symbol in which a guard interval Ngi_l [sample] added to before the effective symbol [a symbol cyclically shifted by (Ngi_l - Ngi_s)] obtained by performing IFFT processing to a series which has been phase-rotated in the frequency direction by (Ngi_l - Ngi_s).

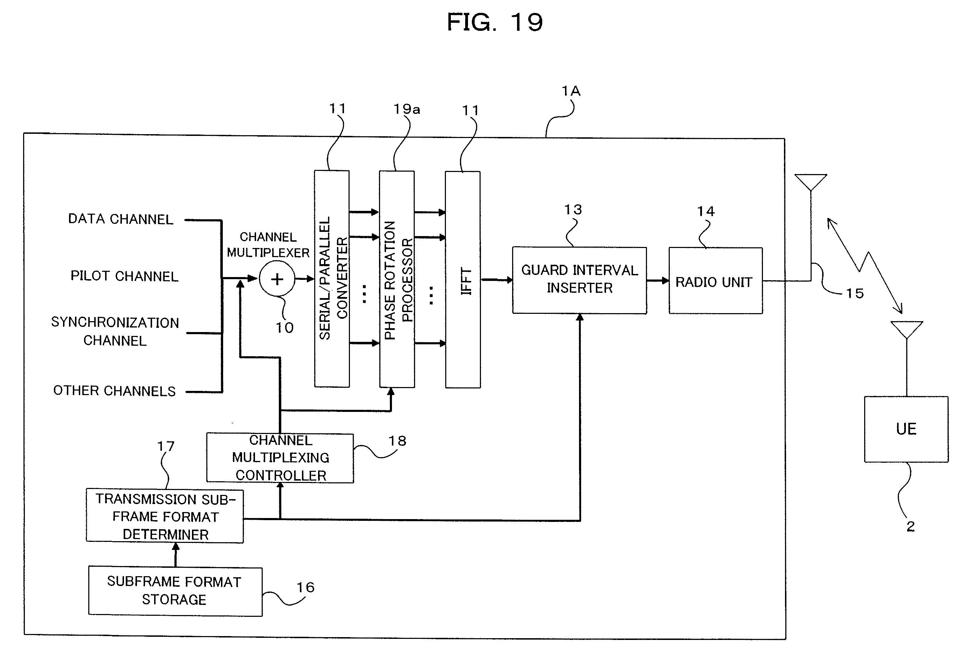

Hence, the base station 1 already described with reference to FIG. 1 in the first embodiment can be constructed as a base station transmitter 1A shown in FIG. 19, for example. That is, a phase rotation processor 19a is interposed between the serial/parallel converter 11 and the IFFT 12, which phase rotation processor 19a realizes a construction in which a series to which phase rotation is given beforehand by (Ngi_l - Ngi_s) in the frequency domain, that is, a series in which the phase of the Nth subcarrier component is rotated by

$$(e^{-j\frac{2\pi}{N}})^{n(N_{gi\_l} - N_{gi\_s})}$$

is input to the IFFT 12 in a case of the leading symbol to which a pilot channel of a long GI subframe is multiplexed, in place of adding a guard interval (the necessity of the guard interval length controller 19 already described is eliminated) before and after the effective symbol of the subframe like in the first embodiment.

In this manner, in place of adding a guard interval before and after the effective symbol of the leading subframe, a series of the frequency domain input to the IFFT 12 can be phase-rotated in the frequency direction, thereby realizing an operation arithmetically equal to the first embodiment.

Here, the phase rotation processor 19a is controlled by the channel multiplexing controller 18. That is, the channel multiplexing controller 18 has a function of giving an instruction of the above phase rotation given to the leading effective symbol of the subframe format to be performed to the phase rotation processor 19a at the time the transmission subframe format determiner 17 determines that the subframe format is a long GI subframe format. Upon receiving such an instruction, the phase rotation processor 19a executes the above mentioned phase rotation processing. In this instance, in FIG. 19, construction elements indicated by the same reference characters are the same as or similar to those already described unless otherwise described.

Hereinafter, a detailed description will be made of an operation (transmission processing) of the base station transmitter 1A (hereinafter will also be simply called "the base station 1A") performed according to the present embodiment with the above described construction.

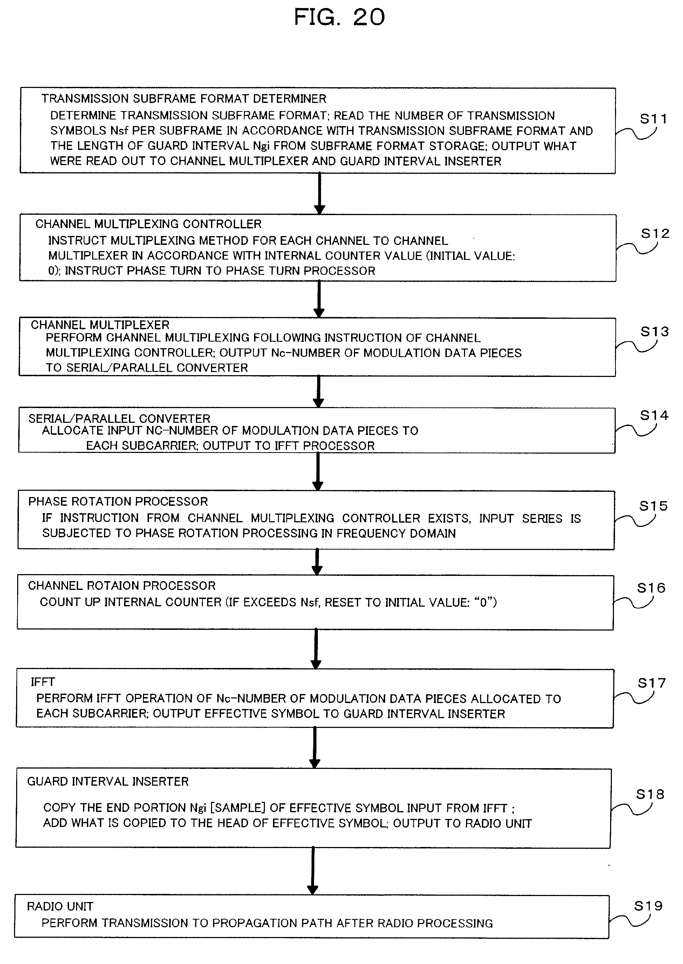

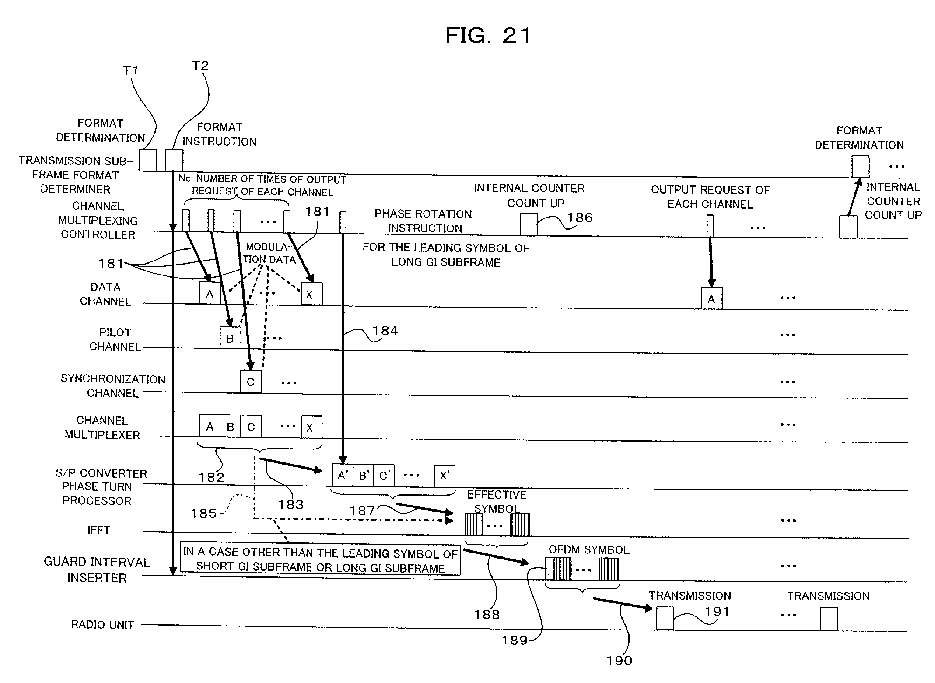

On the base station 1A, the transmission subframe format determiner 17 determines a transmission subframe format (see timing T1 of FIG. 21), and reads the number Nsf of transmission symbols per subframe and also the guard interval length (Ngi) from the subframe storage 16 corresponding to the transmission subframe, and then outputs what are read out to the channel multiplexing controller 18 and the guard interval inserter 13 (see step S11 of FIG. 20 and timing T2 of FIG. 21).

Hereby, the channel multiplexing controller 18 instructs the channel multiplexer 10 of the multiplexing method for each channel in accordance with the value of the internal counter (initial value: "0"). If the thus determined transmission subframe format is a long GI subframe format, the channel multiplexing controller 18 gives a phase rotation instruction of the leading symbol thereof to the phase rotation processor 19a (step S12 of FIG. 20). At that time, the channel multiplexing controller 18, as shown in FIG. 21, outputs a request of outputting each channel signal the number of times of the number of subcarriers Nc, thereby making modulation data (A, B, C, ...) of Nc-number of channels input to the channel multiplexer 10 in a predetermined sequence, following the above instruction (see the arrow 181).

The channel multiplexer 10 follows the instruction of the channel multiplexing controller 18 to perform time-division multiplexing of modulation data (Nc-number of data pieces) of each channel (see the reference character 182 of FIG. 21), and outputs Nc-number of modulation data to the serial/parallel converter 11 (see step S13 of FIG. 20 and the arrow 183 of FIG. 21).

On the other hand, the serial/parallel converter 11 performs serial/parallel conversion of the time-division multiplexed signal (Nc-number of modulation data) input from the channel multiplexer 10, and maps the converted data to each subcarrier, and then outputs it to the phase rotation processor 19a (step S14 of FIG. 20). Upon reception of the phase rotation instruction from the channel multiplexing controller 18 (in a case of an effective symbol of the leading subframe), the phase rotation processor 19a gives phase rotation processing to the input series in the frequency direction as described above, and outputs the result to the IFFT 12 (see step S15 of FIG. 20 and the arrow 187 of FIG. 21). In this instance, in cases other than the leading effective symbol of the subframe, the above described phase rotation processing is not performed to those input series, and the input series is output to the IFFT 12 (see the dotted arrow 185 of FIG. 21).

Then, the channel multiplexing controller 18 counts up the value of the internal counter. Here, if the value exceeds Nsf as a result of such counting up, the value is reset to "0" (see step S16 of FIG. 20 and the reference character 186 of FIG. 21). In this instance, Nsf means the upper limit value of the number of OFDM symbols, and as in the case of the first embodiment, for example, the number of symbols is seven in a case of a short GI subframe, and the number of symbols is six in a case of a long GI subframe.

The IFFT 12 performs IFFT processing of Nc-number of pieces of modulation data mapped to each subcarrier, and outputs an effective symbol to the guard interval inserter 13 (see step S17 of FIG. 20 and the arrow 188 of FIG. 21). The guard interval inserter 13 copies the end Ngi [sample] of the effective symbol input from the IFFT 12, and adds what is copied to before the effective symbol (see the reference character 189 of FIG. 21), and outputs the Ngi [sample]-added effective symbol to the radio unit 14 (see step S18 of FIG. 20 and the arrow 190 of FIG. 21).

Then, the radio unit 14 performs predetermined radio processing such as up conversion to the OFDM symbol from the guard interval inserter 13, and transmits the transmission radio signal from the transmitter antenna 15 to a propagation path (see step S19 of FIG. 20 and the reference character 191 of FIG. 21).

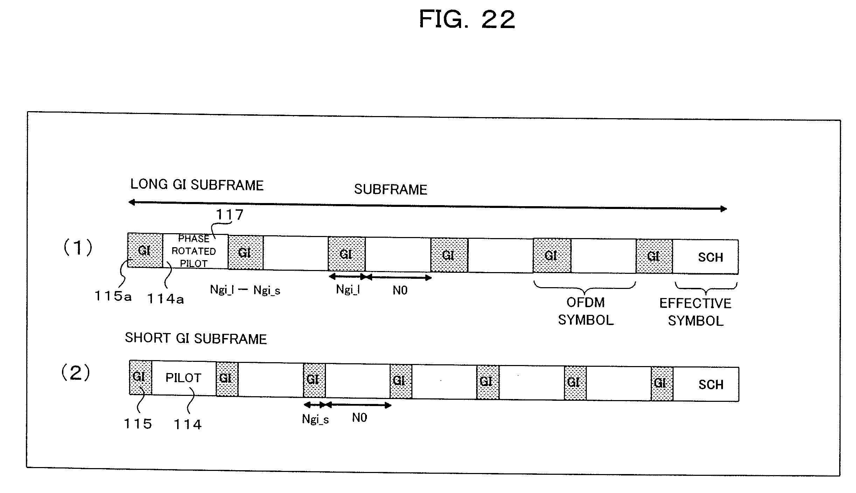

Thereafter, by means of repeating the above described processing, a downlink radio signal is transmitted in the long GI subframe format shown in (1) of FIG. 22, for example, or in the short GI subframe format shown in (2) of FIG. 22.

That is, in the case of a long GI subframe, a guard interval having a length the same as that of a GI length Ngi_l which is added to the following effective symbols is added to before the leading effective symbol of a subframe (see the reference character 115a), and a pilot symbol having been subjected to the above described phase rotation processing is inserted into the effective symbol of the subframe (see the reference character 114a).

On the other hand, in a case of a short GI subframe, as in the case of (2) of FIG. 5, a guard interval having a length the same as that of a GI length Ngi_l which is added to the following effective symbols is added to before the leading effective symbol of a subframe (see the reference character 115), and a pilot symbol which is not subjected to the above described phase rotation processing is also inserted into the leading effective symbol of the subframe (see the reference character 114).

In this instance, the construction and the operation of the receiving end (mobile station 2) are the same as those of the first embodiment.

That is, in the present example, different from the above described first embodiment, it is possible to realize processing equal to that of the first embodiment, without adding any change to a subframe format itself (without adjusting the GI length to be inserted). Accordingly, since the present example is capable of not only realizing the effects and since the benefits equal to those of the first embodiment but also only trivial changes are merely necessary to be added to the already existing construction of a base station apparatus, the present example has increased versatility.

In this instance, the above-described phase rotation processing is capable of being applied to the systems already described in the second to the fourth embodiment.

Further, in the above example, phase rotation processing in the frequency direction is given to the leading effective symbol of a long GI subframe by what is obtained by subtracting the shorter GI length Ngi_s from the long GI length Ngi_s. In contrast, the phase rotation processing (inverse rotation) in the frequency direction can be given to the leading effective symbol of a long GI subframe by what is obtained by subtracting the longer GI length Ngi_s from the shorter GI length Ngi_s (Ngi_s - Ngi_l). This corresponds to making the GI length of the leading effective symbol of a short GI subframe agree to the GI length of a long GI subframe.

Further, in a case where three or more types of subframes of different GI lengths are used, the GI length of any one of the subframes (the minimum GI length is available, and the others are also available) is used as a reference, and phase rotation processing can be performed in accordance with a difference between the GI length of the reference subframe and the GI lengths of other subframes.

Furthermore, although phase rotation is given to the effective data of the leading symbol of a subframe in the above description, such phase rotation can be given to effective data of the second symbol or those thereafter. For example, phase rotation can be given to the effective data part of the third symbol of a short GI subframe and that of the second symbol of a long GI subframe. In such a case, a pilot is multiplexed to the effective data whose data beginning positions are apart from subframe timing by the same amount.

The present invention should by no means be limited to the above-illustrated embodiments, but various changes or modifications may be suggested without departing from the gist of the invention.

INDUSTRIAL APPLICABILITY

As described above, according to the present invention, even in a system in which multiple subframe formats of different GI lengths are present in a mixed manner thereof, it is always possible to perform appropriate pilot channel extraction processing and scramble code detection processing at fixed timing from subframe timing without causing sample deviation, not depending upon the difference in the GI length. Accordingly, appropriate cell search processing is able to be realized without increase in the size or the complexity of the mobile station, so that the mobile station is simplified and improvement of performance at the time of cell search processing is realized. The invention is thus considered to be greatly useful in the field of mobile communications.

**Claims**

1. A transmission processing method for a mobile communications system which includes a base station and a mobile station adapted to perform radio communications with the base station in a cell that is a radio communication area formed by the base station, and which is operable to transmit a plurality of kinds of frames with guard intervals of different lengths inserted before effective data in a mixed condition thereof as downlink communications frames from the base station to the mobile station, said transmission processing method comprising the steps of:

   on the base station,
   adjusting the length of a guard interval in such a manner that at least the positions of a part of the effective data of said plurality of kinds of frames are apart from frame timing by the same amount; and
   transmitting the adjusted frames to the mobile station.

2. The transmission processing method of claim 1, said transmission processing method comprising the step of:

   on the base station,
   performing the above adjustment in such a manner that, when two kinds of frames into which guard intervals of different lengths are inserted are used, the length of a guard interval to be inserted before the effective data in one frame agree to the length of a guard interval to be inserted before the effective data in the other frame.

3. The transmission processing method of claim 1 or claim 2, said transmission processing method comprising the step of:

   on the base station,
   performing the above adjustment so as to adjust the length of a guard interval to be inserted before the effective data of the other frame to the length of the minimum guard interval among said plurality of kinds of frames.

4. The transmission processing method of claim 3, said transmission processing method comprising the step of:

   on the base station,
   inserting a guard interval of a length equal to a difference between the length of the guard interval of said other frame and the length of said minimum guard interval into the end of the effective data.

5. The transmission processing method of any one of claim 1 through claim 4, wherein the effective data is information unique to the cell.

6. The transmission processing method of claim 5, wherein the information unique to the cell is information for the mobile station to identify a scramble code unique to the cell.

7. The transmission processing method of claim 5, wherein the information unique to the cell is broadcasting information to the mobile station.

8. The transmission processing method of any one of claim 5 through claim 7, wherein the information unique to the cell contains information relating to the length of a guard interval.

9. The transmission processing method of claim 1, said transmission processing method comprising the step of:

   on the base station,
   inserting information for the mobile station to identify a scramble code unique to the cell into effective data of the leading portion of the frame; and
   inserting a result obtained by means of multiplying information for identifying a group of the scramble codes, which are grouped by information for identifying the scramble code, by information for identifying the scramble code, as scramble code group information into effective data at the end portion of the frame.

10. The transmission processing method of claim 9, said transmission processing method comprising the step of:

    on the mobile station,
    demodulating the scramble code group information inserted into effective data of the end portion of the frame by means of information for identifying the scramble code inserted into effective data of the leading portion of the frame.

11. The transmission processing method of any one of claim 9 or claim 10, said transmission processing method comprising the step of:

    on the base station,
    making the scramble code group information include information relating to the length of a guard interval.

12. The transmission processing method of claim 8 or claim 11, said transmission processing method comprising the step of:

    on the mobile station,
    detecting information relating to the length of the guard interval; and
    performing reception processing of the frame on the basis of the detected information.

13. A base station which includes a base station and a mobile station adapted to perform radio communications with the base station in a cell that is a radio communication area formed by the base station, and which is operable to transmit a plurality of kinds of frames with guard intervals of different lengths inserted before effective data in a mixed condition thereof as downlink communications frames from the base station to the mobile station, said base station comprising:

    a guard interval inserting unit which inserts a guard interval before effective data of the leading portion of the frame; and
    a guard interval length controlling unit which controls the length of a guard interval to be inserted by said guard interval inserting unit in such a manner that at least the positions of a part of the effective data of said plurality of kinds of frames are apart from frame timing by the same amount.

**14.** The base station of claim 13, wherein said guard interval length controlling unit performs the above adjustment in such a manner that, when two kinds of frames to which guard intervals of different lengths are used, the length of a guard interval to be inserted before the effective data in one frame agree to the length of a guard interval to be inserted before the effective data in the other frame.

**15.** The base station of claim 13 or claim 14, wherein said guard interval length controlling unit performs the above adjustment so as to adjust the length of a guard interval to be inserted before the effective data of the other frames to the length of the minimum guard interval among said plurality of kinds of frames.

**16.** The base station of claim 15, wherein said guard interval length controlling unit inserts a guard interval of a length equal to a difference between the length of the guard interval of said other frame and the length of said minimum guard interval into the end of the effective data.

**17.** The base station of any one of claim 13 through claim 16, wherein the effective data is information unique to the cell.

**18.** The base station of claim 17, wherein the information unique to the cell is information for the mobile station to identify a scramble code unique to the cell.

**19.** A transmission processing method for a mobile communications system which includes a base station and a mobile station adapted to perform radio communications with the base station in a cell that is a radio communication area formed by the base station, and which is operable to transmit a plurality of kinds of frames with guard intervals of different lengths inserted before effective data in a mixed condition thereof as downlink frames from the base station to the mobile station, said transmission processing method comprising the steps of:

on the base station,
giving a phase rotation to the effective data of at least any one of said frames in accordance with a difference between the length of a guard interval of the effective data and the length of another guard interval of another frame; and
transmitting the frame after being subjected to the phase rotation processing to the mobile station.

**20.** A base station including a base station and a mobile station adapted to perform radio communications with the base station in a cell that is a radio communication area formed by the base station, and which is operable to transmit a plurality of kinds of frames with guard intervals of different lengths inserted before effective data in a mixed condition thereof as downlink communications frames from the base station to the mobile station, said base station comprising:

a guard interval inserting unit which inserts a guard interval before effective data of the leading portion of the frame; and
a phase rotation processing unit which gives a phase rotation to the effective data of at least any one of said frames in accordance with a difference between the length of a guard interval of the effective data and the length of another guard interval of another frame.

**21.** The base station of claim 17, wherein the information unique to the cell is broadcasting information to the mobile station.

**22.** The base station of any one of claim 17, claim 18, and claim 21, wherein the information unique to the cell contains information relating to the length of a guard interval.

# FIG. 1

EP 1 971 058 A1

# FIG. 2

| | |
|---|---|
| **TRANSMISSION SUBFRAME FORMAT DETERMINER**<br>DETERMINE TRANSMISSION SUBFRAME FORMAT; READ TRANSMISSION SUBFRAME<br>FORMAT TYPE (S, L), THE NUMBER OF TRANSMISSION SYMBOLS Nsf PER SUBFRAME,<br>AND THE LENGTH OF GUARD INTERVAL(Ngi_s, Ngi_l); OUTPUT WHAT WERE READ OUT TO<br>CHANNEL MULTIPLEXER AND GUARD INTERVAL LENGTH CONTROLLER | S1 |
| **CHANNEL MULTIPLEXING CONTROLLER**<br>INSTRUCT MULTIPLEXING METHOD FOR EACH CHANNEL TO CHANNEL MULTIPLEXER IN<br>ACCORDANCE WITH INTERNAL COUNTER VALUE (INITIAL VALUE: 0) | S2 |
| **CHANNEL MULTIPLEXER**<br>PERFORM CHANNEL MULTIPLEXING OF EACH CHANNEL FOLLOWING<br>INSTRUCTION OF CHANNEL MULTIPLEXING CONTROLLER; OUTPUT Nc-NUMBER<br>OF MODULATION DATA PIECES TO SERIAL/PARALLEL CONVERTER | S3 |
| **CHANNEL MULTIPLEXING CONTROLLER**<br>COUNT UP INTERNAL COUNTER VALUE (IN CASE OF EXCEEDING Nsf, RESET TO "0") | S4 |
| **SERIAL/PARALLEL CONVERTER**<br>ALLOCATE INPUT Nc-NUMBER OF MODULATION DATA PIECES TO<br>EACH SUBCARRIER; OUTPUT TO IFFT | S5 |
| **IFFT**<br>PERFORM IFFT OPERATION OF Nc-NUMBER OF MODULATION DATA PIECES;<br>OUTPUT EFFECTIVE SYMBOLS TO GUARD INTERVAL INSERTER | S6 |
| **GUARD INTERVAL LENGTH CONTROLLER**<br>OUTPUT Ngi_pre AND Ngi_post TO GUARD INTERVAL INSERTER<br>IF CURRENT TRANSMISSION SUBFRAME FORMAT = S,<br>(Ngi_pre,Ngi_post)=(Ngi_s,0)<br>IF CURRENT TRANSMISSION SUBFRAME FORMAT = L AND INTERNAL COUNTER = 0,<br>(Ngi_pre,Ngi_post)=(Ngi_s,Ngi_l-Ngi_s)<br>IF CURRENT TRANSMISSION SUBFRAME FORMAT = L AND INTERNAL COUNTER ≠ 0,<br>(Ngi_pre,Ngi_post)=(Ngi_l,0) | S7 |
| **GUARD INTERVAL INSERTER**<br>COPY THE END PORTION Ngi_pre [SAMPLE] OF EFFECTIVE SYMBOL INPUT FROM IFFT ;<br>ADD WHAT IS COPIED TO THE HEAD OF THE EFFECTIVE SYMBOL; COPY THE END<br>PORTION Ngi_post [SAMPLE] OF EFFECTIVE SYMBOL; ADD WHAT IS COPIED TO THE<br>END OF EFFECTIVE SYMBOLS; OUTPUT TO RADIO UNIT | S8 |
| **GUARD INTERVAL LENGTH CONTROLLER**<br>COUNT UP INTERNAL COUNTER (IF EXCEEDS Nsf, RESET TO INITIAL VALUE: "0") | S9 |
| **RADIO UNIT**<br>PERFORM TRANSMISSION TO PROPAGATION PATH AFTER RADIO PROCESSING | S10 |

# FIG. 3

# FIG. 4

SHORT GI SUBFRAME

(1)

LONG GI SUBFRAME

(2)

⊠ : SYNCHRONIZATION CHANNEL

▨ : PILOT CHANNEL

☐ : DATA CHANNEL

FIG. 5

FIG. 6

FIRST STAGE PROCESSOR — 22

SYNCHRONIZATION CHANNEL REPLICA SIGNAL STORAGE — 22-1

CORRELATION PROCESSOR — 22-2

SUBFRAME TIMING DETECTOR — 22-3

RADIO UNIT — 21

20

2

SECOND STAGE PROCESSOR — 23

GI REMOVER — 23-1

FFT — 23-2

PILOT EXTRACTOR — 23-3 (23-7)

23-9

23-8

PILOT CORRELATION PROCESSOR — 23-5

CANDIDATE SCRAMBLE CODE STORAGE — 23-4

SCRAMBLE CODE DETECTOR — 23-6

DEMODULATOR — 24

# FIG. 7

START CELL SEARCH

FIRST STAGE

SUBFRAME TIMING SYNCHRONIZATION ⟩ S21

SECOND STAGE

SCRAMBLE CODE DETECTION ⟩ S22

END CELL SEARCH

# FIG. 8

SUBFRAME TIMING

300                    300

?            ?

RECEPTION SIGNAL = SHORT GI SUBFRAME

114

301 → | GI | PILOT | GI | ...

115

400

RECEPTION SIGNAL = LONG GI SUBFRAME

114

302 → | GI | PILOT | GI | GI | ...

115

FFT WINDOW
400            117

$N_{gi\_s}$

EP 1 971 058 A1

EP 1 971 058 A1

# FIG. 9

24

Ngi_s     Ngi_l−Ngi_s

GI | PILOT | GI

Ngi_l    FFT WINDOW

241

242

PILOT | GI

243

GI | PILOT | GI

244

FFT PROCESSING

FIG. 10

EP 1 971 058 A1

FIG. 11

LONG GI SUBFRAME      SUBFRAME

(1)

115   117

GI | PILOT + BCH | GI | GI | | GI | | GI | | GI | | GI | SCH

$N_{gi\_s}$    $N_{gi\_l} - N_{gi\_s}$    $N_{gi\_l}$   N0

114

OFDM SYMBOL    EFFECTIVE SYMBOL

SHORT GI SUBFRAME

(2)

GI | PILOT + BCH | GI | | GI | | GI | | GI | | GI | | GI | SCH

$N_{gi\_s}$   N0

115   114

EP 1 971 058 A1

# FIG. 12

TIME →

FREQUENCY f

Nc[SUBCARRIER]

| G(0)P(0) | P(0) |
| G(1)P(1) | P(1) |
| G(2)P(2) | P(2) |
| G(3)P(3) | P(3) |
| G(4)P(4) | P(4) |
| G(5)P(5) | P(5) |
| ⋮ | ⋮ |
| G(Nc-6)P(Nc-6) | P(Nc-6) |
| G(Nc-5)P(Nc-5) | P(Nc-5) |
| G(Nc-4)P(Nc-4) | P(Nc-4) |
| G(Nc-3)P(Nc-3) | P(Nc-3) |
| G(Nc-2)P(Nc-2) | P(Nc-2) |
| G(Nc-1)P(Nc-1) | P(Nc-1) |

SUBFRAME TIMING

☐ : PILOT CHANNEL

EP 1 971 058 A1

# FIG. 13

EP 1 971 058 A1

# FIG. 14

LONG GI SUBFRAME

SUBFRAME

(1)

| GI | PILOT + BCH | GI | GI | | GI | | GI | | GI | | GI | | GI | P-SCH+ S-SCH |

115   117   114

Ngi_s   Ngi_l − Ngi_s   Ngi_l   N0   OFDM SYMBOL   EFFECTIVE SYMBOL   119

SHORT GI SUBFRAME

(2)

| GI | PILOT + BCH | GI | GI | GI | GI | GI | GI | P-SCH+ S-SCH |

Ngi_s   N0   115   114   119

EP 1 971 058 A1

# FIG. 15

TIME →

FREQUENCY f

Nc[SUBCARRIER]

G(0)P(0)L    P(0)    — 111
— 116
G(2)P(2)L    P(2)    — 111
— 116
G(4)P(4)L    P(4)    — 111
— 116

⋮            ⋮

G(Nc-6)P(Nc-6)L    P(Nc-6)    — 111
— 116
G(Nc-4)P(Nc-4)L    P(Nc-4)    — 111
— 116
G(Nc-2)P(Nc-2)L    P(Nc-2)    — 111
— 116

118  112  (repeated)

SUBFRAME TIMING

|  | : | SYNCHRONIZATION CHANNEL |
|  | : | PILOT CHANNEL |
|  | : | BROADCASTING INFORMATION CHANNEL |
|  | : | GROUP IDENTIFICATION INFORMATION |

EP 1 971 058 A1

# FIG. 16

TIME

FREQUENCY *f*
Nc [SUBCARRIER]

1 SUBFRAME

113   111   112

112 ⌇ 111

113 ⌇ 111 ⌇ 112 ⌇ 113

112 ⌇ 111

113

112   113

▨ : SYNCHRONIZATION CHANNEL

▧ : PILOT CHANNEL

☐ : DATA CHANNEL

# FIG. 17

LONG GI SUBFRAME        SUBFRAME

(1)

| GI | SCH | GI | GI | | GI | | GI | | GI | | GI | PILOT |

115    117                                                                    119

Ngi_s    Ngi_l — Ngi_s    Ngi_l    N0

114    OFDM SYMBOL    EFFECTIVE SYMBOL

SHORT GI SUBFRAME

(2)

| GI | SCH | GI | | GI | | GI | | GI | | GI | | GI | PILOT |

119

Ngi_s    N0

115    114

# FIG. 18

SUBFRAME TIMING

300                    300

?            ?

RECEPTION SIGNAL = SHORT GI SUBFRAME

301 →  | GI | PILOT | GI | SCH | GI | · · ·
                              115   114

RECEPTION SIGNAL = LONG GI SUBFRAME

302 →  | GI | PILOT | GI | SCH | GI | GI | · · ·
                              115  114  117

CORRELATION

TIME

EP 1 971 058 A1

# FIG. 19

DATA CHANNEL

PILOT CHANNEL

SYNCHRONIZATION CHANNEL

OTHER CHANNELS

CHANNEL MULTIPLEXER

10

11
SERIAL/PARALLEL CONVERTER

19a
PHASE ROTATION PROCESSOR

11
IFFT

13
GUARD INTERVAL INSERTER

14
RADIO UNIT

15

1A

2

UE

18
CHANNEL MULTIPLEXING CONTROLLER

17
TRANSMISSION SUB-FRAME FORMAT DETERMINER

16
SUBFRAME FORMAT STORAGE

EP 1 971 058 A1

# FIG. 20

TRANSMISSION SUBFRAME FORMAT DETERMINER
  DETERMINE TRANSMISSION SUBFRAME FORMAT; READ THE NUMBER OF TRANSMISSION
SYMBOLS Nsf PER SUBFRAME IN ACCORDANCE WITH TRANSMISSION SUBFRAME FORMAT AND
THE LENGTH OF GUARD INTERVAL Ngi FROM SUBFRAME FORMAT STORAGE; OUTPUT WHAT
WERE READ OUT TO CHANNEL MULTIPLEXER AND GUARD INTERVAL INSERTER — S11

CHANNEL MULTIPLEXING CONTROLLER
  INSTRUCT MULTIPLEXING METHOD FOR EACH CHANNEL TO CHANNEL
MULTIPLEXER IN ACCORDANCE WITH INTERNAL COUNTER VALUE (INITIAL VALUE:
0); INSTRUCT PHASE TURN TO PHASE TURN PROCESSOR — S12

CHANNEL MULTIPLEXER
  PERFORM CHANNEL MULTIPLEXING FOLLOWING INSTRUCTION OF CHANNEL
MULTIPLEXING CONTROLLER; OUTPUT Nc-NUMBER OF MODULATION DATA PIECES
TO SERIAL/PARALLEL CONVERTER — S13

SERIAL/PARALLEL CONVERTER
  ALLOCATE INPUT NC-NUMBER OF MODULATION DATA PIECES TO
    EACH SUBCARRIER; OUTPUT TO IFFT PROCESSOR — S14

PHASE ROTATION PROCESSOR
  IF INSTRUCTION FROM CHANNEL MULTIPLEXING CONTROLLER EXISTS, INPUT SERIES IS
SUBJECTED TO PHASE ROTATION PROCESSING IN FREQUENCY DOMAIN — S15

CHANNEL ROTAION PROCESSOR
  COUNT UP INTERNAL COUNTER (IF EXCEEDS Nsf, RESET TO INITIAL VALUE: "0") — S16

IFFT
  PERFORM IFFT OPERATION OF Nc-NUMBER OF MODULATION DATA PIECES ALLOCATED TO
EACH SUBCARRIER; OUTPUT EFFECTIVE SYMBOL TO GUARD INTERVAL INSERTER — S17

GUARD INTERVAL INSERTER

  COPY THE END PORTION Ngi [SAMPLE] OF EFFECTIVE SYMBOL INPUT FROM IFFT ;
ADD WHAT IS COPIED TO THE HEAD OF EFFECTIVE SYMBOL; OUTPUT TO RADIO UNIT — S18

RADIO UNIT
  PERFORM TRANSMISSION TO PROPAGATION PATH AFTER RADIO PROCESSING — S19

# FIG. 21

# FIG. 22

LONG GI SUBFRAME          SUBFRAME

(1)

| GI | PHASE ROTATED PILOT 117 | GI | | GI | | GI | | GI | | GI | SCH |

115a  114a      Ngi_l — Ngi_s      Ngi_l    N0

OFDM SYMBOL      EFFECTIVE SYMBOL

SHORT GI SUBFRAME

(2)

| GI | PILOT | GI | | GI | | GI | | GI | | GI | | GI | SCH |

115   114      Ngi_s    N0

# FIG. 23

EP 1 971 058 A1

FIG. 24

EP 1 971 058 A1

FIG. 25

# FIG. 26

```
        ┌─────────────────────────┐
        │    START CELL SEARCH     │
        └─────────────────────────┘
                    │
                    ▼
FIRST STAGE
        ┌─────────────────────────────────────┐  S100
        │  SUBFRAME TIMING SYNCHRONIZATION     │
        └─────────────────────────────────────┘
                    │
                    ▼
SECOND STAGE
        ┌─────────────────────────────────────┐  S200
        │     SCRAMBLE CODE DETECTION          │
        └─────────────────────────────────────┘
                    │
                    ▼
        ┌─────────────────────────┐
        │     END CELL SEARCH      │
        └─────────────────────────┘
```

# FIG. 27

SUBFRAME TIMING SYNCHRONIZATION | GI REMOVAL | FFT | PILOT CORRELATION PROCESSING

201 · 202 · 203 · 204

SUBFRAME TIMING

300 · 300

?   ?

RECEPTION SIGNAL = SHORT GI SUBFRAME

301 → GI | PILOT | GI · · ·

400

RECEPTION SIGNAL = LONG GI SUBFRAME

302 → GI | PILOT | GI · · ·

FFT WINDOW
400

EP 1 971 058 A1

## INTERNATIONAL SEARCH REPORT

| International application No. |
| --- |
| PCT/JP2005/023081 |

A.  CLASSIFICATION OF SUBJECT MATTER
*H04J11/00*(2006.01), *H04B1/707*(2006.01)

According to International Patent Classification (IPC) or to both national classification and IPC

B.  FIELDS SEARCHED

Minimum documentation searched (classification system followed by classification symbols)
H04B1/707, H04J11/00

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
IEEEXplore

C.  DOCUMENTS CONSIDERED TO BE RELEVANT

| Category* | Citation of document, with indication, where appropriate, of the relevant passages | Relevant to claim No. |
| --- | --- | --- |
| A | JP 2005-150850 A  (NTT Docomo Inc.), 09 June, 2005 (09.06.05), Figs. 4, 6 & EP 1531593 A2       & CN 1617533 A & US 2005/0099936 A1 | 1-22 |
| A | Nokia, Cell Search procedure for initial synchronization and neighbour cell identification, 3GPP TSG RAN WG1 Meeting #43 R1-051549, 2005.11 | 1-22 |
| A | Motohiro TANNO et al., "Kudari Link Broadband OFCDM ni Okeru Pilot Channel o Mochiiru 3 Dankai Kosoku Cell Search Method", IEICE Technical Report RCS2002-40, 12 April, 2002 (12.04.02), pages 135 to 140 | 1-22 |

| ☒   Further documents are listed in the continuation of Box C. | ☐   See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 February, 2006 (20.02.06) | 28 February, 2006 (28.02.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/023081 |

C (Continuation). DOCUMENTS CONSIDERED TO BE RELEVANT

| Category* | Citation of document, with indication, where appropriate, of the relevant passages | Relevant to claim No. |
| --- | --- | --- |
| T | NTT DoCoMo, NEC, Sharp, SCH Structure and Cell Search Method in E-UTRA Downlink, 3GPP TSG-RAN WG1 LTE Ad Hoc Meeting R1-060042, 2006.01 | 1-22 |
| T | ZTE, Cell Search Scheme for Evolved UTRA, 3GPP TSG-RAN WG1 LTE Ad Hoc Meeting R1-060117, 2006.01 | 1-22 |

Form PCT/ISA/210 (continuation of second sheet) (April 2005)

## REFERENCES CITED IN THE DESCRIPTION

**Non-patent literature cited in the description**

- Physical Channels and Multiplexing in Evolved UTRA Donwlink. *NTT DoCoMo, NEC, SHARP,* 29 August 2005
- Cell Search procedure for initial synchronization and neighbour cell identification. *Nokia,* 07 November 2005

- **TANNO ; ARATA ; HIGUCHI ; SAWABASHI.** The Three-stage Fast Cell Search Method Using Pilot Channel in Downlink Broadband OFCDM. *Technical Report of IEICE, RCS2002-40, CQ2002-40,* April 2002, 135-140